# EUROPEAN PATENT APPLICATION

(11) **EP 4 696 620 A1**
(43) Date of publication of application: **18.02.2026**
(21) Application number: 24195064.1
(22) Date of filing: 16.08.2024
(51) Int. Cl.: B65G 1/04

(54) **STORAGE FACILITY WITHOUT LIFTS**

(71) Applicant: Dematic GmbH, 63150 Heusenstamm (DE); Dematic Pte. Ltd., Singapore 409835 (SG)
(72) Inventor: HUBERTH, Daniel, 63741 Aschaffenburg (DE); YAMASHITA, Shin, 61440 Oberursel (DE); GLIGOR, Traian, 63829 Krombach (DE)
(74) Representative: Moser Götze & Partner Patentanwälte mbB

(57) **Abstract**

A storage facility (1) having a plurality of storage racks (R) and storage rack levels (3) for storage of load units (T), wherein two storage racks (R) have an aisle (2) between them, each storage rack level having running rails on the opposing faces of the storage racks (R), on which at least one storage and retrieval apparatus (5) may travel the length of the aisle (2). Each storage and retrieval apparatus (5) having a first set of four traveling wheels for traveling along the running rails horizontally along the respective storage rack level (3) of an aisle (2) and has climbing means for vertical movement, along vertical climbing chimneys, that include vertical climbing rails (15). The climbing means of each storage and retrieval apparatus (5) include a set of four climbing wheels (16) for interaction with the vertical climbing rails (15). The storage and retrieval apparatus (5) has a drive means (70a) to drive the first set of wheels (10) for horizontal travel and a separate drive means (70b) for driving the climbing wheels (16) for vertical climbing travel or a single drive (80) for both horizontal and vertical travel, which can be switched between the wheels that are driven.

## Description

The invention relates to a storage facility in accordance with the preamble of claim 1.

When picking or compiling orders from ready-picked transport units, such as e. g. articles or containers, it is necessary to provide the transport units, which are associated with a common order, in a targeted or sorted manner. For this purpose, it is typical to temporarily store (buffer) the transport units of one order until all of the transport units required for the order are present. They are then passed collectively onto a collecting line which guides them e. g. to the palletization area, picking station, goods issuing department, dispatch etc.

A (high) rack storage facility includes a feeding or storage-entry area, via which the goods are delivered and from which the racking serving units collect the goods for entry into storage, the so-called pre-zone. Similarly, a retrieval-from-storage area is required, at which after retrieval from storage the racking serving units place down the goods also assigned to the pre-zone. In the case of automatic picking warehouses, picking points are typically arranged in the pre-zone. The pre-zone is also where the goods are identified for the inventory management system or the material flow computer.

The applicant's EP 1 964 792 B1 discloses a method for providing transport units from a storage facility in a desired sequence on at least one collecting line. Racking serving units in each storage racking aisle, retrieval-from-storage lifts and retrieval-from-storage feeding lines are controlled so as to be coordinated with one another and are loaded with goods such that they ultimately end up sorted on the collecting line or are delivered thereby.

The control and coordination are therefore relatively complex and obviously require technical installations in the so-called pre-zone, i. e. the area outside the actual racking.

US 9,452,886 B2 discloses exchange of transporting units directly between adjoining storage racks from one access aisle to a specific aisle via transverse conveyance locations in the storage racks themselves, wherein the storage and retrieval vehicle comprises a shuttle at each level of the storage racks, wherein the directly exchanging comprises the shuttle acting on the transport units to displace the transport units by contact with the shuttle in the transverse conveyance locations from one of the adjoining racks to the other of the adjoining racks including transferring product transport units to the specific aisle using the transverse locations.

However, lifts are in contrast to shuttles the bottleneck in such systems.

DE 20 2004 012 021 U1 discloses a storage system that has at least one conveyor with a horizontal transporting unit and executing vertical or vertical and horizontal movements between two shelf columns installed one behind the other. The storage system has at least one row of more than two shelf columns placed one behind the other and separated from one another by respective feed shaft equipped with a conveyor. Though each of the conveyors are movable on both sides of each shelf column, all the compartments of these shelf columns can be directly loaded or emptied.

EP 3 609 814 B1 discloses an order-picking system comprising self-guided carriages that run along the floor of the warehouse and are also able to climb the face of a rack. For which the carriages have at least two rolling wheels and motorized climbing means formed by gearwheel carriers capable of interacting with two pairs of posts so as to allow the carriage to move up along the posts. A roller chain is attached to each of the posts and extends parallel to the longitudinal axis of the post to which it is attached and is intended to receive the gearwheel cooperating with the post to which it is attached, and each movable support has means for rigidly connecting to one of said four posts in order to maintain a predetermined distance between the axis of the gearwheel and the chain. This system is complex as the chain may move.

US 2017/0313514 A1, US 11,365,049 B2, US 2019/0270591 A1 describe systems with climbing shuttles that have a set of climbing wheels for engaging climbing rails and a set of horizontal travelling wheels for horizontal travel on running rails in a rack level and/or on the ground etc. The shuttles may receive power from conducting rails running parallel to vertical climbing rails.

In contrast thereto, the object of the invention is to provide a storage facility in a fashion that alleviates the bottleneck created by lifts and at the same time allows for an efficient handling of storage units in the racks.

This object is achieved by the storage described in claim 1. Preferred embodiments are described in the subordinate claims.

In accordance with the invention, it has been recognized that if each storage and retrieval apparatus has climbing means for vertical movement, especially along the vertical climbing rails, it is possible to achieve high storage density with good access rates without necessity for dedicated lifts. Additionally, the invention provides scalability and flexibility, as the number of storage and retrieval apparatus (e. g. shuttles) can be easily adjusted depending on throughput needs and/or size of the storage.

It is even possible to upgrade a conventional system at a later stage allowing to refurbish existing storages by adding the vertical movement means and e. g. vertical climbing rails in the end zones of conventional racks. This could be done by replacing lifts with climbing rails or installing the climbing rails in the original lift frame.

The vertical climbing rails can for example be installed instead of or in addition to a conventional lift. Obviously, more than one climbing rails section may be present in a racking. These can be arranged at the end sections of the aisles, but also in the middle section, which has throughput benefits for longer aisles.

It is preferrable that the vertical climbing rails creating climbing sections or chimneys are present at one side of the racking and as such include one, two or three chimneys side-by-side. If higher through-put is needed, more chimneys are used.

It is also possible to additionally add a chimney with climbing rails at an opposite end of the racking, located on the maintenance side.

The system can handle a wide variety of load carrying means, e. g. totes, trays or cartons.

Further advantages are that orders may be consolidated within the storage rack simplifying ground or conveyor based traffic outside of the racking, as the storage and retrieval apparatus does not need to leave an aisle to change storage levels. Accordingly, sequencing and buffering of load carrying means is possible on every level.

The invention implements an easy roaming principle without additional equipment and without any height restriction.

A system according to the invention has almost no single point of failure. It does need to have a dedicated lift for totes etc., bots, shuttles or the like.

In a preferred embodiment, the climbing means of the storage and retrieval apparatus includes a set of four climbing wheels for interaction with the vertical climbing rails, the four climbing wheels having a perpendicular axis of movement in comparison to the four travelling wheels and the four climbing wheels being retractable between an extended engaging position for interaction with the vertical climbing rails and a retracted non-engaging position while travelling horizontally along the running rails horizontally along the respective storage rack level. Such climbing wheels can be retrofitted to known storage and retrieval apparatus. The climbing wheels may be located on a vertical axis with the wheels of the first set of horizontal travelling wheels, so that in the horizontal view they have the same position.

Each storage and retrieval apparatus may have a second set of four or more retractable traveling wheels for traveling along direction change rails horizontally along the respective storage rack level of an aisle in the area of the vertical climbing rails; two wheels per set on each side of the storage and retrieval apparatus, one or both of each side being driven, e. g. on a joint driven axis, for use while changing the direction of movement of the storage and retrieval apparatus from a vertical movement along the vertical climbing rails to a horizontal movement along the running rails of a respective storage rack level of an aisle.

The four traveling wheels of the second set for traveling along direction change rails horizontally along the respective storage rack level of an aisle in the area of the vertical rails are preferably retractable wheels and are controlled to be extracted or extended to the use position whilst the storage and retrieval apparatus is traveling along the direction change rails. Their position on the storage and retrieval apparatus is such that their distance and placement allows interaction with the direction change rails when changing direction of travel. In other words, the second set of travelling wheels may be retractable, so that they do not interfere while climbing. Additionally, they may be retractable as to be in use only during the transition phase from vertical climbing to horizontal travel on the running rails.

These wheels are therefore preferably arranged - in longitudinal or horizontal travel direction of the storage and retrieval apparatus - further outside, so that the first set of horizontal (main) travelling wheels are framed by the second set of wheels.

Further, they may be implemented to have a higher level of the contact surface (e. g. offset of 2 mm), so as to cooperate with the corresponding direction change rails only during the transition phase, but to not have contact as soon as the first set of "normal" horizontal traveling wheels has contact due to their larger diameter and/or position of axle, after overcoming the gap (see below).

Direction change rails may be arranged between the vertical climbing rails on each level having running rails and the running rails of a respective storage rack level of an aisle may then have a gap to the direction change rails horizontally along the respective storage rack level of an aisle in the area of the respective vertical rail. The direction change rail sand the horizontal running rails may be aligned surface-wise. This allows an easy and smooth change of direction from vertical to horizontal movement (or vice versa).

According to the invention, the storage and retrieval apparatus may have a drive means to drive the first and optionally also the second set of wheels for horizontal travel and a separate drive means for driving the climbing wheels for vertical climbing travel. It is also possible to implement a single drive for both horizontal and vertical travel, which can be switched between the wheels that are driven, e. g. via a gearbox and clutch.

When using a separate drive for the climbing wheels, such vertical drive means may comprise a motor with a gearbox and a chain or toothed belt driven by the gear box and slung around a drive gear of the respective climbing wheel. It is possible that the chain or toothed belt drives both climbing wheels arranged on opposite sides of the respective vehicle front or back end.

The retraction mechanism for the climbing may preferably include a lever arm that is articulated or hinged on a pivotal point arranged at a position as high as possible in the storage and retrieval apparatus. The lever arm may also be hinged to a motor assembly for pivoting about the pivotal point.

The driven climbing wheels may be pushed towards the climbing rail by a rotative/linear motor assembly until the climbing wheel has a certain force/tension against the climbing rail.

A self-wedging effect is based on the small angle of the lever arm (fixed/pivoting point at the highest position facing downwards) which supports the climbing wheel and allows it to reach and engage the climbing rail.

A possible example of a lever arm is a triangular lever arm. The pivotal point would be arranged at one corner (highest). An inward facing corner would be hinged to the motor assembly and an outward facing corner would carry the climbing wheel.

The angle of the arm in contact with the climbing rail (e. g. chain) and the spring inside of the pushing unit absorbs installation tolerance and deflections between the climbing rails connected/fixed to the aisle uprights and focuses the weight and forces into the climbing wheels.

The drive means to drive the first and optionally also the second set of wheels for horizontal travel may be a motor driving a belt to drive an axle connecting both wheels on opposite sides of the respective vehicle front or back end. The secondary wheels may use a second axle that is driven off the first axle using intermeshing gears. A frame may be used to guide the axle (or shaft) and also protect the intermeshing gears.

The secondary wheels may be extracted/extended by use of an additional drive assembly which moves the secondary wheel axle between the retracted and extended position. The meshing gears may stay in contact throughout the movement. The additional drive assembly may use a linear or other kind of drive.

When using a single drive for both horizontal and vertical travel, which can be switched between the wheels that are driven, the gearbox and clutch will be implemented to allow switching the single drive between the drive of the climbing wheels and the axle or shaft for driving the first set of wheels for horizontal travel using the clutch. As such the clutch may also allow electromagnetic switching of the motor output between one or two drive sprockets for the chain or belt drive of the climbing wheels and the drive shaft or axle for the horizontal travelling wheels.

So essentially, the storage and retrieval apparatus would climb up the vertical climbing rails by use of its extended climbing wheels. As soon as it reaches its destination level, the auxiliary traveling wheels for traveling along direction change rails are extended to engage the direction change rails. The climbing wheels can then be retracted. The storage and retrieval apparatus will travel horizontally along these rails (just a few centimeters) until the first set of four traveling wheels for traveling along the running rails horizontally engage the horizontal aisle running rails. The auxiliary traveling wheels for traveling along direction change rails may be retracted or loose contact due to the offset (e. g. based on smaller diameter), only after the storage and retrieval apparatus has completely left the chimney, as also the rear auxiliary traveling wheels need to pass the gap. In the case of offset wheels, the auxiliary traveling wheels need not be retracted for "normal" horizontal travel.

Beneficially, the running rails and the direction change rails are aligned with each other. Preferably, they both have a C-shaped cross section, of which the top surface forms support for the first set traveling wheels and the inner lower surface forms a support for the second set of traveling wheels.

Additionally, it is possible to implement cross aisle running rails to form a bridge perpendicular to aisle direction for movement of each storage and retrieval apparatus between aisles, preferably propelled by the set of the four climbing wheels. Then it is even possible for the storage and retrieval apparatus to change aisles without leaving the racking.

In one possible embodiment, the climbing wheels are gearwheels (pinion) and the vertical rails and/or cross aisle running rails have corresponding linear gears (racks) or chains, with which a positive interaction occurs. It is also possible to use two "standard" chains side-by-side, which may be offset by half a chain link so as to improve precision. Then the climbing wheel gear would have two corresponding gear sections or separate gear wheels etc.

In an embodiment the gear wheels (pinion, sprockets) may be implemented as self-locking (e. g. by self-weight of the storage and retrieval apparatus) so as to stop a storage and retrieval apparatus in the event of (a power) failure from uncontrolled vertical travel or crash. To do so the gear wheels may be attached by pivoting arms to the frame of the storage and retrieval apparatus such that it implements a wedge-like function. Additionally, the gear wheels may be equipped with a mechanical failsafe brake, which would hold a storage and retrieval apparatus in a current position even if power or control is lost as long as the pinions are locked.

Obviously, it is also possible to use different climbing means. For example, the climbing wheels could also be implemented as wheels that are pressed against vertical rails with enough force to produce a friction high enough to not slide downwards, even when the load carrying area is loaded.

While climbing the storage and retrieval apparatus climbs up the vertical climbing rails by use of its extended climbing wheels. During this movement the storage and retrieval apparatus may be stabilized and guided by a stabilizing unit. The stabilizing unit may be extendable and retractable so as only to be in use during the vertical climbing movement. The stabilizing unit may include a stabilizing arm that has spaced guiding rollers on the opposite end that accommodate a vertical guide plate or rail that extends vertically along the length of the climbing rail. The vertical guide plate can be positioned adjacent the climbing rails. It is also possible to foresee several vertical guide plates and corresponding stabilizing units. For example, a stabilizing unit may be arranged at each side at the front and back of the storage and retrieval apparatus. The guide rollers may include not only a first pair of spaced guide rollers but also a second pair of spaced guide rollers aligned with the first pair and also for engaging the vertical guide plate.

The stabilizing arm may be moved between an extended position in which it engages the vertical guide plate with the guiding rollers and a retracted position in which it is encompassed in a housing. The movement of the stabilizing arm may be effected by a linear drive, such as an electric actuator, which can swivel the stabilizing arm between the retracted position and the extended position by approx. 90 degrees around a vertical swivel axis.

The stabilizing unit may include a sensor to confirm and/or track the stabilizing arm position. Especially, the stabilizing unit may include a first sensor for confirming that the stabilizing arm is in the retracted position and may include a second sensor for confirming that the stabilizing arm is in the extended position.

The climbing wheels may be implemented with a braking mechanism. The braking mechanism may be linked to the use of current. If no current is used or available at the bus bars, the brake may kick in to avoid falling of the storage and retrieval apparatus. The brake mechanism may be implemented to directly or indirectly mechanically stop the climbing wheels from rotating.

The storage facility may include a direct horizontal exchange of load units taking place from one aisle to an adjacent aisle via exchange locations within the storage racks, wherein the storage and retrieval apparatus itself actively horizontally moves the transportation units in the exchange locations using the unit (or load) handling means, preferable telescopic arms having engageable unit (or load) contacting means (i. e. rotatable or linear moveable fingers). In this way load units may be transferred from one aisle to the adjacent aisle on the shortest path, without need for them to leave an aisle or for the storage and retrieval apparatus to do so.

Preferably, the rack has an interface to conveyors of the pre-zone or front zone of a fulfilment area for connection to picking stations anywhere between the lowest level to highest level, preferable at least one per aisle. More than one per aisle is also possible. Obviously, it is also possible but not limited to have more than one fulfilment area, e. g. on different levels, both separately connected in the described way to the rack.

Such hand over level(s) are adjacent the climbing sections or chimney with the climbing rails. When adjusting the performance towards higher performance-based systems, different levels for handover can be added based on throughput requirements. Combined with double decker picking stations and handover in multiple levels will lead to a high-performance solution.

In a preferred embodiment, the storage rack may have at least one interface allowing hand over of unit loads to an AMR (Autonomous Mobile Robot) for further ground-based transportation. This allows hand over of unit loads for their transportation outside of the rack in a very flexible way, as the AMR are not bound to rails or predetermined routes. Such an interface may be present in at least one aisle and could be present in several aisles or every aisle.

The storage facility may also include a ground-based transportation AMR (AMR shuttle movers) allowing transportation of a storage and retrieval apparatus within the storage, preferably between aisles. This will allow to flexibly use the storage and retrieval apparatus within the whole rack, e. g. to deal with unbalanced retrieval volume in each aisle, and to scale the number of storage and retrieval apparatus as needed by the customer's throughput. For example, one may start with a few storage and retrieval apparatus not dedicated to aisles and use the invention for changing aisles. Later when throughput needs increase, more storage and retrieval apparatus can be installed and less change of aisles becomes necessary.

To increase storage capacity and density, the storage facility may include a storage and retrieval apparatus (stacker shuttle) implemented with a stacking means for stacking and unstacking unit loads, preferably containers or totes, on top of each other on its carrying area. This allows for storing and possibly transport of stacked load units.

In addition, it is possible to include a conventional lift, which would be present in at least once within the system. This would allow conventional storage and retrieval apparatus to be used side-by-side with the dual direction travel storage and retrieval apparatus of the invention and/or increase vertical throughput of the system.

It is possible that more than one storage and retrieval apparatus be inducted into a single level of a storage rack aisle, thereby increasing throughput. Preferably, the number of storage and retrieval apparatus is linked to the length of an aisle. Usually, two storage and retrieval apparatus will suffice. The storage and retrieval apparatus would then have sensors and controls to negotiate travel area between the storage and retrieval apparatus on same level.

The invention allows a rescue operation of a broken-down storage and retrieval apparatus. A failed storage and retrieval apparatus (e. g. shuttle) can be rescued by pushing it to the rear end of the rack aisle by use of another storage and retrieval apparatus as long as the failed storage and retrieval apparatus does not have its unit handling means in a position extended into the storage racks.

The rescue operation is facilitated, if at least two climbing wheels of a set have bumpers facing the direction of movement along the aisle for contacting a respective pair of climbing wheels of a second storage and retrieval apparatus allowing a pushing operation. Alternatively or additionally, the front and/or back surface of the housing may be equipped with bumpers.

Preferably, each aisle has at least four pairs of vertical climbing rails on the opposing faces of the storage racks adjacent the respective aisle, so that the system may allow access from both sides of an aisle, depending on placement. It is also possible to use one set for upward and the other set for downward travel. This increases throughput and redundancy.

To perform onboard picking, at least one storage and retrieval apparatus may have an onboard robotic picking device. This may be used to pick items from load units without leaving the rack. The robotic picking device may include a vision system to identify items and allow a directional control of the gripping device of the robotic picking device.

The storage facility may also include a flow rack in at least one storage rack level.

It is known to implement onboard power means, i. e. rechargeable batteries or high-capacity capacitors. If at least one of the vertical rails includes a power charging line (conductor rail or bus bar) adapted to connect to a power take-up device on the storage and retrieval apparatus to allow charging of an onboard battery or capacitor of the storage and retrieval apparatus and/or supply of drive means, it is possible to charge the storage and retrieval apparatus while climbing, especially when climbing downwards, and in parallel possibly supply drive means. These may also be charged using an onboard recuperation device connected to the climbing wheels to recover energy while moving downwards. The bus bars may extend over the height of the chimney and in parallel to the climbing rails.

The bus bars may be available in every climbing section or only in dedicated climbing sections. The bus bars may be implemented with single or multiple power infeeds. The bus bars may be sectioned and sections divided by isolators. Then the collectors of the power take-up device should have two connection pads to allow bridging of the gap created by the isolators so as to allow continuous power supply to the storage and retrieval apparatus while climbing.

Normally, two bus bars will be present per climbing section or chimney, one for plus and one for minus current. Such two bus bars may be arranged in any possible geometry, especially pairwise side-by-side at one vertical climbing rail, one each at opposite vertical climbing rails or one each at diagonal vertical climbing rails. Adding an additional pair of bus bars allows for parallel power supply to the climbing drive of storage and retrieval apparatus and the recharging mechanism.

Additionally, a parking position along the aisle with bus bar access may be implemented to allow a waiting storage and retrieval apparatus to charge also during non-movement. The bus bars may be additional bus bars depending on the location of the parking space.

Such a parking position with bus bar access may be located adjacent the vertical climbing rails, anywhere in the longitudinal extension of the running rails of an aisle and/or at a maintenance side position. Preferably, it is positioned in the middle of an aisle.

The power take-up device on the storage and retrieval apparatus may be retractable or extendable such that the collector of the power take-up device only contacts the power line or bus bar when in climbing mode, i. e. extended climbing wheels. In other words, according to the invention, the power take-up device is coupled to the retraction and extension movement of the climbing wheels.

Alternatively, the retraction may be coupled to the extension of the secondary wheels for traveling along the direction change rails.

Therefore, the collector of the power take-up device may be electronically and/or mechanically coupled to the movement of the extension/retraction mechanism of the climbing wheels or the extension/retraction mechanism of the secondary wheels.

The power take-up device may be positioned adjacent the climbing wheels.

The retraction mechanism may preferably include a lever arm that is articulated such that the climbing wheels are pressed into the linear gears or climbing rails by self-weight of the storage and retrieval apparatus allowing positive interaction. The movement of the collector may be coupled to the lever arm.

The power take-up collector my include one or two connector pads for the physical connection to the bus bars. The connector pads may be swivably hinged by a bar that in turn is also swivably hinged so as to allow good contact independent of orientation.

Alternatively, the power take-up collector my include one or two connector pads for the physical connection to the bus bars that are arranged side-by-side in parallel and are biased towards the bus bars by springs. The springs may be situated between a bracket connecting to the lever arm and a bracket holding the connector pads.

Additionally, the storage and retrieval apparatus may contain an energy storage, e. g. battery, for horizontal travel only, which then needs to be charged at horizontal positions. This can be done with e. g. inductive charging, which can take place by using vertically or horizontally installed inductive chargers.

The storage facility according to the invention may additionally include a removable maintenance platform that is adapted to be brought into place for accessing the area between the vertical climbing rails. This allows access to a storage level where necessary, even in the area of the vertical climbing rails.

Additionally, the storage facility according to the invention may additionally include maintenance platforms arranged at the other side of the storage rack or side opposite to that where the climbing rails are positioned. These create maintenance levels. This allows for maintenance without having to place a movable platform. Such (fixed) platforms will usually be arranged every 3 - 6 travelling levels of the storage and retrieval apparatus, e. g. every 4 or 5 levels.

Such a maintenance area created thereby will include maintenance access bays for safe access by the personnel and possibly include stairs, ladders etc. Between the maintenance access bays and the storage rack itself a climbing rail section will be located that allows storage and retrieval apparatus needing maintenance to climb up or down without interfering with normal operation. Additionally, a crane may be installed to allow immovable storage and retrieval apparatus to be handled.

Access to the maintenance area is restricted for safety reasons. If personnel needs to enter the maintenance area, they need to request entry by for example pressing a button or entering a code. Then the storage and retrieval apparatus is instructed to drive to a waiting area and their drives are switched powerless. Then the access door or gate is actually unlocked and can be opened to enter the maintenance area. All of this is under the control of the controller or computer system controlling the storage facility, warehouse etc. If the access door is opened by force, the controller will turn the whole maintenance level powerless and possibly start an alarm.

Further, such an additional climbing rail section on the side of the rack opposite the normal climbing sections or chimneys allows a special operation, of circular travel of the storage and retrieval apparatus, especially with the segment created by the maintenance platforms and maintenance access bays which interrupt the vertical climbing rails. Such a circular travel can increase performance. For example, when several loads from the same level need to be extracted, several storage and retrieval apparatus can enter into that same level but return by changing the level at the end of the aisle using the additional climbing rail section and returning to the "normal" climbing chimneys at the beginning (or other side) of the aisle.

The additional climbing sections or chimneys (not limited) to the end of the aisle must be only over a maintenance level or access bay, therefore the circular travel is limited to that segment and ensures safe entrance for personnel.

It is possible to have a clockwise circular travel within a maintenance level, and this would have the advantage of not needing any bus bar etc. when the storage and retrieval apparatus change the level climbing downwards.

It is possible to have a counter-clockwise circularity within the maintenance level but if the battery capacity is not sufficient for the storage and retrieval apparatus to climb, this climbing section or chimney over the maintenance level at the aisle end will need energy bus bars.

If the onboard energy storage (battery, power cap etc.) of the storage and retrieval apparatus or shuttle is depleted, it is possible to hook up a mobile battery pack to power the apparatus, so that it can temporarily move vertically or horizontally, so that it may be serviced etc. To allow this the storage and retrieval apparatus may be configured with a dedicated socket for the corresponding connector from the external mobile battery pack.

Additionally, the storage facility of the invention may include a triple deep storage rack reducing rack cost by 25% and increasing storage density by 25%. It is also possible to use stacked load units reducing rack storage cost by 25% and increasing density by 25%.

A beneficial use for the invention is in the area of vertical farming, in which the storage is used to stock living plants (https://en.wikipedia.org/wiki/Vertical_farming ).

The storage and retrieval apparatus could store and retrieve containers containing plants. These special containers (e. g. totes) of such an embodiment may be equipped with an insert frame with plant soil or other things. Therefore, the storage and retrieval apparatus would beneficially be implemented to be splash water protected.

Such an embodiment could also additionally include a modular and mobile plant treatment system for value added services (e. g. irrigation, insect protection treatment, fertilizer application etc.).

With such a modular and mobile plant treatment system including an application head and a pump operated supply tank a directed fine dosing is possible and the irrigation head can be moved to reach respective plants only, thus minimizing use of water etc. Such a tank may be filled manually or automatically on the lowest level, e. g. at a dedicated replenishment station, that would be implemented instead of or in addition to GTP stations.

A mixed operation of storage and retrieval apparatus loaded with plants and a storage and retrieval apparatus loaded with the modular and mobile plant treatment system is possible.

Further features and details of the invention will be apparent from the description hereinafter of the drawing, in which
- Figure 1: shows a schematic perspective view of a storage rack according to a first embodiment of the invention; and
- Figure 2A-D: show details of the shuttle of figure 1;
- Figure 3A, B: show details of vertical climbing rails in the rack;
- Figure 4A, B: show an alternative to the implementation of figure 3;
- Figure 4C: schematically shows implementation of bus bars in a standard racking and details bus bar configuration;
- Figure 4D: schematically shows different bus bar arrangements in a standard racking;
- Figure 5A-E: show details of travel direction change;
- Figure 6: shows a schematic implementation of a shuttle having "wedging arms";
- Figure 6A-B: schematically show a bus bar collector implementation in a shuttle;
- Figure 6C-D: schematically show implementations of drive concepts in a shuttle;
- Figure 7-13: show different rack configurations for use in the invention;
- Figure 14: shows a possible configuration of a storage having two storage areas connected by a shuttle bridge;
- Figure 15: shows a possible configuration of a storage using racks with staggered heights;
- Figure 16A-E: show an embodiment using AMR for transfer of a shuttle between aisles and also for ground-based transportation between a virtual GTP station and the storage racks;
- Figure 17A: shows an embodiment using conventional conveyors for container transport and a physical GTP station;
- Figure 17B: shows variants of handover levels for container exit from a standard rack or entry into a standard rack;
- Figure 18A, B: show an embodiment using a flow rack;
- Figure 18C: shows an embodiment with maintenance levels and circular flow of shuttles;
- Figure 19: shows a rescue operation of a shuttle;
- Figure 20: shows an embodiment having transport shuttles and robotic picking shuttles as well as having cross aisle running rails forming a bridge;
- Figure 21: shows an implementation of a removable maintenance platform;
- Figure 22 - 24: show an embodiment using the invention in the context of vertical farming;
- Figure 25 - 26: show an alternative bus bar collector implementation in a shuttle in a side view and a top view and
- Figure 27 - 28: show a stabilizing unit of a shuttle for vertical travel in a top view.

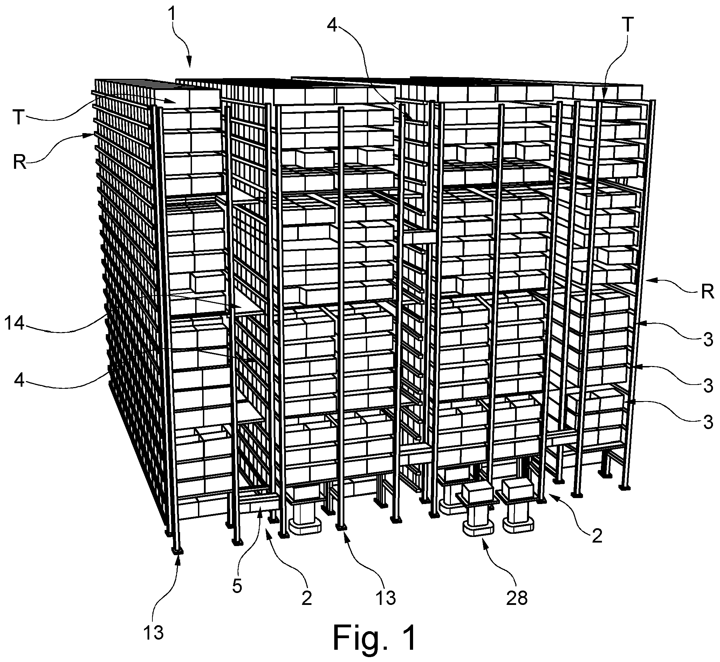

Figures 1 - 3 show a storage facility 1, the storage facility 1 having a plurality of storage racks R and storage rack levels 3 for storage of load units T, wherein the storage racks R have an aisle 2 between them on one side and are placed back-to-back on the other side.

The load units T may be trays, totes, containers etc. and be of the storage type S in which product is stored so to be picked from when fulfilling orders. The load units T may also be of the order type O into which product is put or placed according to an order for fulfilling said order at least partially.

Each storage rack level having running rails 4 on the opposing faces of the storage racks R, on which at least one storage and retrieval apparatus 5 may travel the length of the aisle 2.

In the present embodiment, the load units T are stored in a double deep configuration in the storage racks R.

The storage racks have load rails 11 (or ledgers) on which the load units T are placed and that are supported between the running rails 4 on one side and longitudinal support rails 12 on the other side. The ledgers 11 are arranged perpendicular to the longitudinal extension of the rack R (or aisle 2). Two (or more) ledgers 11 support each load unit T (e. g. tray) from below. The ledgers 11 are arranged along the storage space of each rack R and level 3.

The running rails 4 and longitudinal support rails 12 are attached to uprights 13. The uprights 13 either face the aisle 2 or are located between racks R that are arranged back-to-back.

Every five (5) levels 3 a maintenance platform 14 is arranged in the aisle 2 so that maintenance personnel may access the aisle, racks and shuttles etc. if necessary. The maintenance platform 14 of each maintenance area 14A may include a maintenance access bay 14B on one side of the rack R through which personnel may enter the maintenance platform 14. The maintenance platforms 14 can be arranged differently, e. g. at only certain levels, regularly or irregularly at specific levels only.

In the present embodiment the storage and retrieval apparatus 5 are so-called shuttles 5 having a carrying area 6 for at least one load unit T, located between load handling means 7 that may extend into the storage racks R in a direction perpendicular to the length of the aisle 2, for placing or retrieval of load units T into or from the storage racks R.

Load handling means 7 include telescopic rails 8 that can be extended to both sides of the carrying area 6 and have contact elements 9 that can be swiveled between an upright non-use position and a horizontal use-position, in which the contact elements 9 will contact the face of a load unit T when pushing into the racks R or pulling from the racks R or onto carrying area 6 in a known manner.

Each shuttle 5 has a first set of four traveling wheels 10 for traveling along the running rails 4 horizontally along the respective storage rack level 3 of an aisle 2. Two wheels per set on each side of the storage and retrieval apparatus 5, one or both of each side being driven by a motor via a joint driven axis.

For each aisle 2 at least two pairs of vertical climbing rails 15 (a set of vertical climbing rails) are present on opposing faces of the storage racks R adjacent the respective aisle 2. Preferably, they will be arranged at the end of the aisle.

These are implemented as uprights 13. The vertical climbing rails 15 may also be attached to uprights 13 in the appropriate positions.

Each shuttle 5 has climbing means 16 for vertical movement along the vertical climbing rails 15 by engaging these.

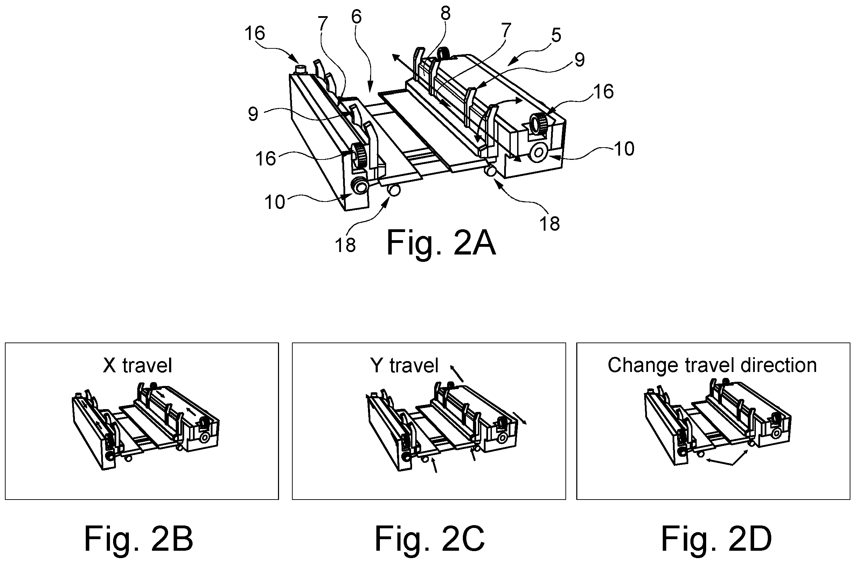

The climbing wheels 16 of each shuttle 5 include a set of four climbing wheels 16 for interaction with the vertical climbing rails 15. The four climbing wheels 16 have a perpendicular axis of movement in comparison to the four travelling wheels 10. The four climbing wheels 16 are retractable between an extended engaging position for interaction with the vertical climbing rails 15 (see figure 2C) and a retracted non-engaging position (see figure 2B) while travelling horizontally along the running rails 4 horizontally along the respective storage rack level 3.

The climbing wheels 16 are each arranged at a similar position as the travelling wheels 10 on the shuttle 5, so as not to change the center of gravity etc. As can be seen in figures 2 they are each arranged slightly above the travelling wheels so as not to interfere with horizontal movement or center of gravity.

The climbing wheels 16 are gear wheels (pinions) and the vertical climbing rails 15 have corresponding linear gears (racks) or chains in the present embodiment.

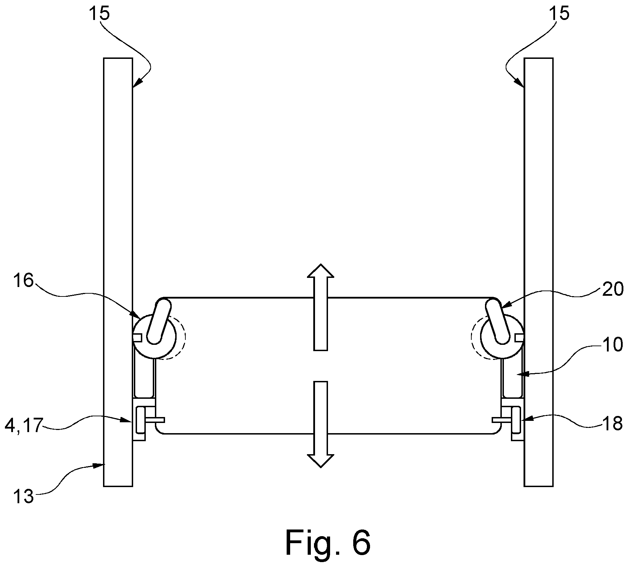

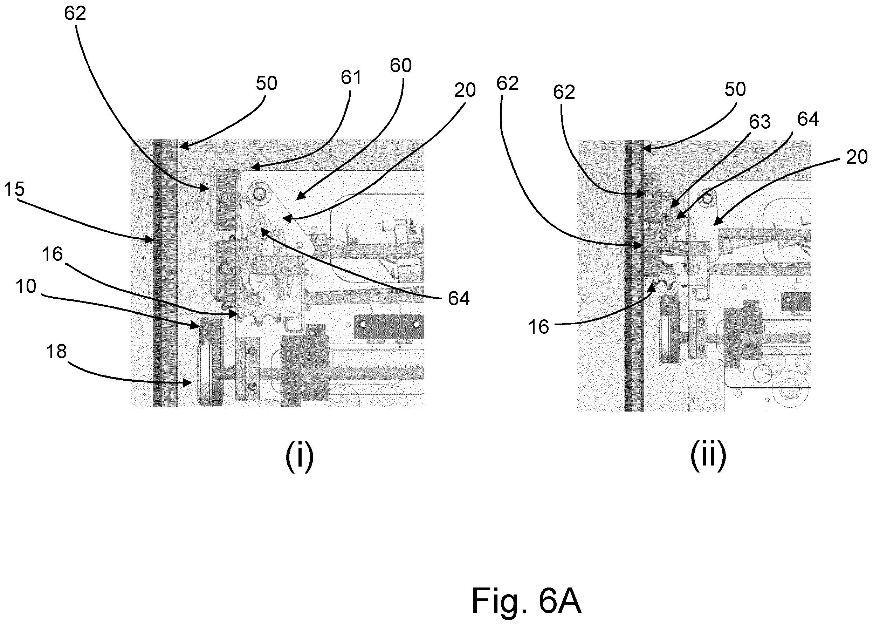

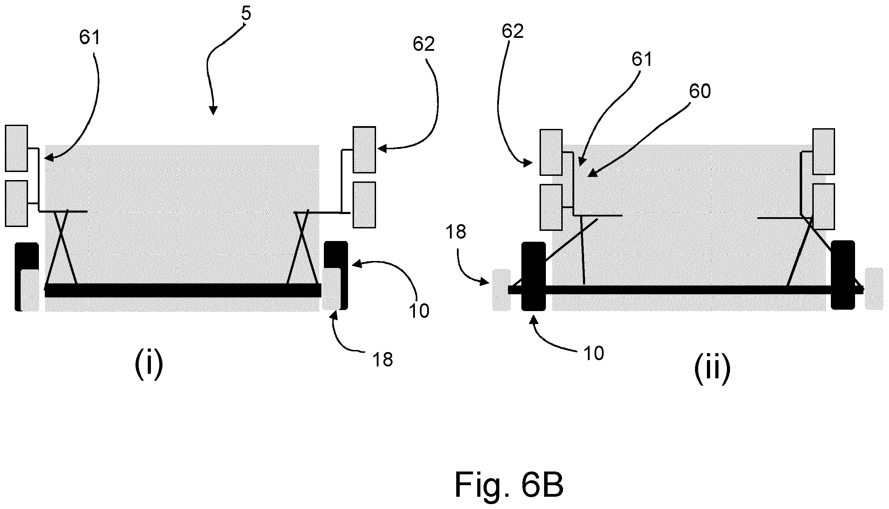

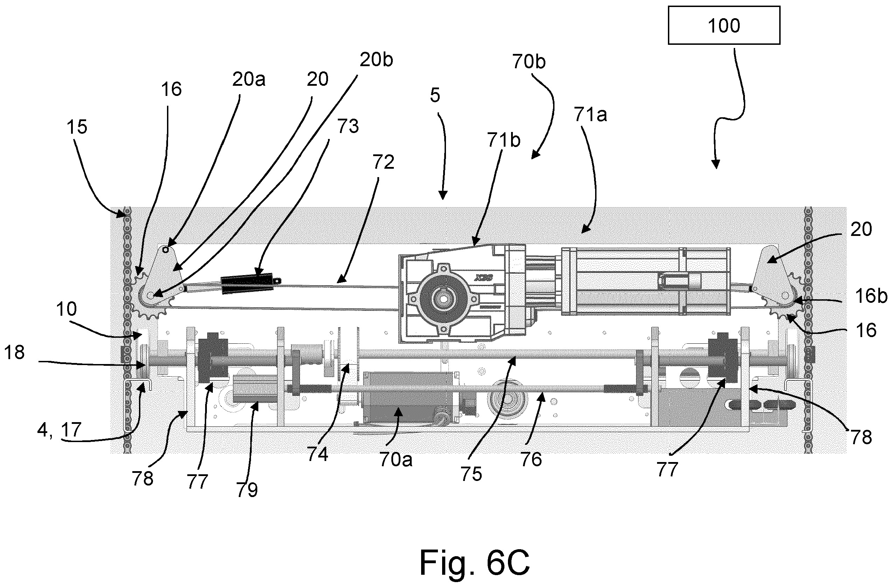

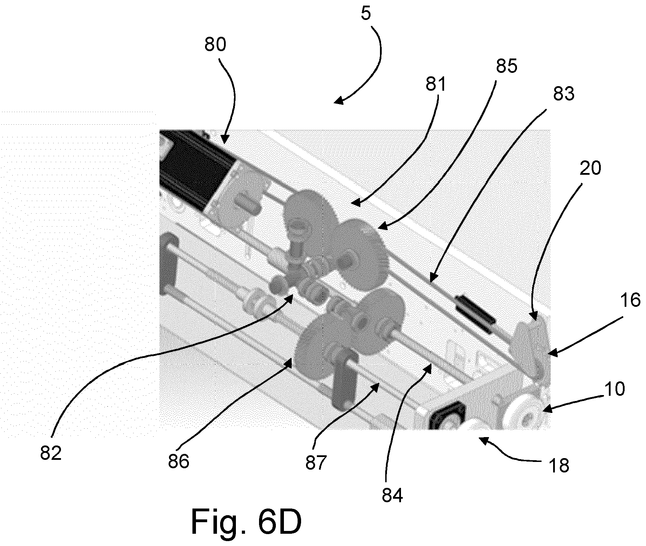

The retraction mechanism is preferably a lever arm 20 (see for example figure 6) that is articulated such that the climbing wheels 16 are pressed into the linear gears or vertical climbing rails 15 by self-weight of the shuttle 5 allowing positive interaction and climbing by driving the climbing wheel set as if they were travelling wheels. To do so the retraction mechanism connects the climbing wheels 16 to the drive motors of the travelling wheels 10 when in the extended position.

As schematically seen in figure 6, the lever arm 20 of the retraction mechanism is preferably hinged and driven, so as to implement a self-locking principle by self-weight of the shuttle 5, so as to stop a shuttle 5 in the event of (a power) failure from uncontrolled vertical travel or crash. To do so the climbing wheels 16 are attached by lever arm 20 to the frame of the shuttle 5 such that it implements a wedge-like function, as the hinge is higher than the climbing wheel 16. This allows a shuttle 5 to slowly passively travel downward.

Additionally, or alternatively, the climbing wheels 16 are equipped with a mechanical failsafe brake that may be activated so as to completely stop a shuttle 5.

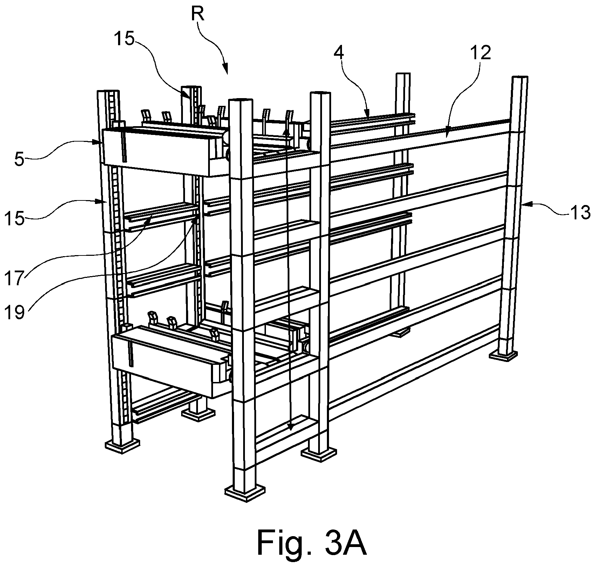

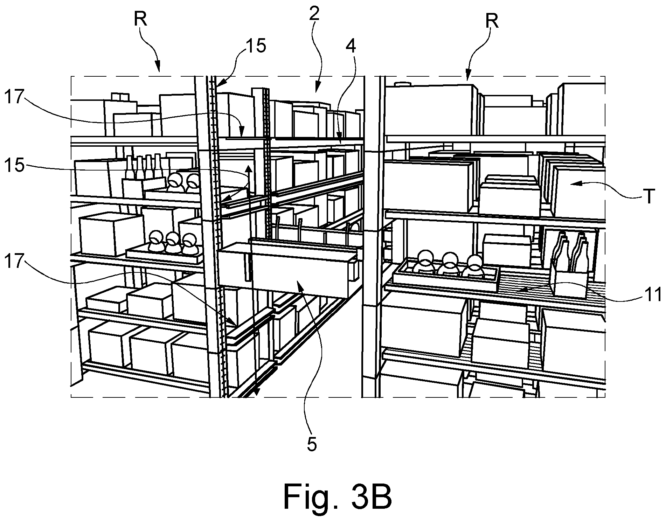

This allows the shuttle 5 to move up and down the vertical climbing rails 15 as shown for example in figure 3A.

As can also be seen in figure 3A the horizontal running rails 4 need to be interrupted by a gap or space 19 on both sides of direction change rails 17 coinciding with the vertical climbing rails 15 so that the shuttle 5 can access each level 3.

Each shuttle 5 has a second set of four retractable traveling wheels 18 for traveling horizontally along the direction change rails 17 along the respective storage rack level 3 of an aisle 2 in the area of the vertical climbing rails 15. Space or gap 19 is wide enough that the traveling wheels 10 "fit through".

Each shuttle 5 has two retractable traveling wheels 18 per set on each side; one or both of each side being driven on a joint driven axis, for use while changing the direction of movement of the shuttle 5 from a vertical movement along the vertical climbing rails 15 to a horizontal movement along the running rails 4 of a respective storage rack level 3 of an aisle 2. Therefore, the retractable traveling wheels 18 may be positioned inward and lower than the "normal" traveling wheels 10.

Similar to the climbing wheels 16, the four retractable traveling wheels 18 are retractable wheels and are controlled to be extended whilst the shuttle 5 is traveling along direction change rails 17. In the extended position the traveling wheels 18 are engaged with the drive of the travelling wheels 10.

In general, this allows for the following movement. As indicated in figure 2B the shuttle 5 uses the travelling wheels 10 to travel horizontally along the running rails 4 in each respective level 3 in the aisle 2. For vertical travel, as indicated in figure 2D the shuttle 5 uses climbing wheels 16 to travel vertically along the vertical climbing rails 15 to a respective level. During the direction change phase, as indicated in figure 2D, the shuttle 5 uses the traveling wheels 18 to travel along the direction change rails 17.

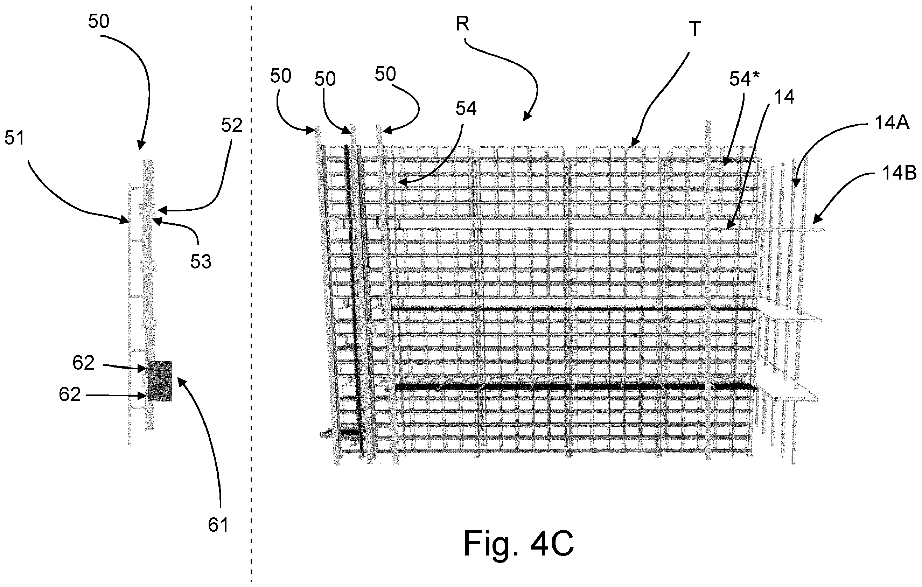

As can be seen in figure 4C, the climbing sections formed by the vertical climbing rails 15 can be implemented with bus bars 50 (or power lines) running the height of the climbing rails 15 to allow shuttles 5 climbing upward or downward to use collectors 61 of their power take-up device 60 to contact the bus bars 50 to receive power therefrom.

The bus bars 50 may be available in every climbing section or only in dedicated climbing sections. The bus bars may be implemented with single or multiple power infeeds 51. The bus bars may be sectioned and sections divided by isolators 52. Then the collectors 61 of the power take-up device 60 should have two connection pads 62 to allow bridging of the gap 53 created by the isolators so as to allow continuous power supply of the shuttles 5 while climbing.

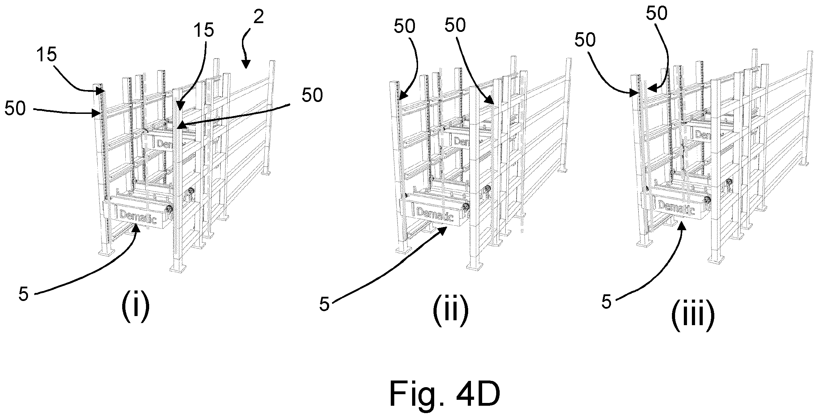

As indicated in figure 4D, two pairs of bus bars 50 will be present per climbing section or chimney. This allows for parallel power supply to the climbing drive of the shuttle 5 and the recharging mechanism. Such two pairs of bus bars 50 may be arranged in any possible geometry, especially side-by-side at one vertical climbing rail 15 (see figure 4D iii), one each at opposite vertical climbing rails 15 (see figure 4D i) or one each at diagonal vertical climbing rails 15 (see figure 4D ii).

Additionally, a parking position 54 along the aisle 2 on the running rails 4 with bus bar 50 access may be implemented to allow a waiting shuttle 5 to charge also during non-movement. The bus bars 50 may be additional bus bars depending on the location of the parking space.

Such a parking position 54 with bus bar 50 access may be located adjacent the vertical climbing rails 15, anywhere in the longitudinal extension of the running rails 4 of an aisle 2 and/or at a maintenance side position 54*.

As indicated in figure 6A (i) and (ii) the extension of the climbing wheels 16 by the lever arm 20 to engage the vertical climbing rails 15 may be coupled to the extension of the power take-up device 60 to contact the bus bars 50 with collector 61 using the two connection pads 62.

The connection pads 62 are each hinged to a link bar 63 which in turn is hinged centrally to a support 64 that is connected by lever 65 to the lever arm 20. Alternatively, as indicated in figure 6B (i) and (ii) the extension and retraction of the power take-up device 60 to contact the bus bar 50 with its collector 61 using the two connection pads 62 may be coupled to the retraction and extension of the "second" auxiliary traveling wheels 18. When the auxiliary traveling wheels 18 are extended (see figure 6B ii), the shuttle 5 is in the transition phase from climbing to horizontal travel and is travelling on the direction change rails 17, so that there is no eminent need for power anymore. Therefore, the power take-up device 60 may be retracted. However, if the auxiliary traveling wheels 18 are retracted, meaning the shuttle 5 is climbing, the power is needed and the power take-up device 60 should be extended (see figure 6B i).

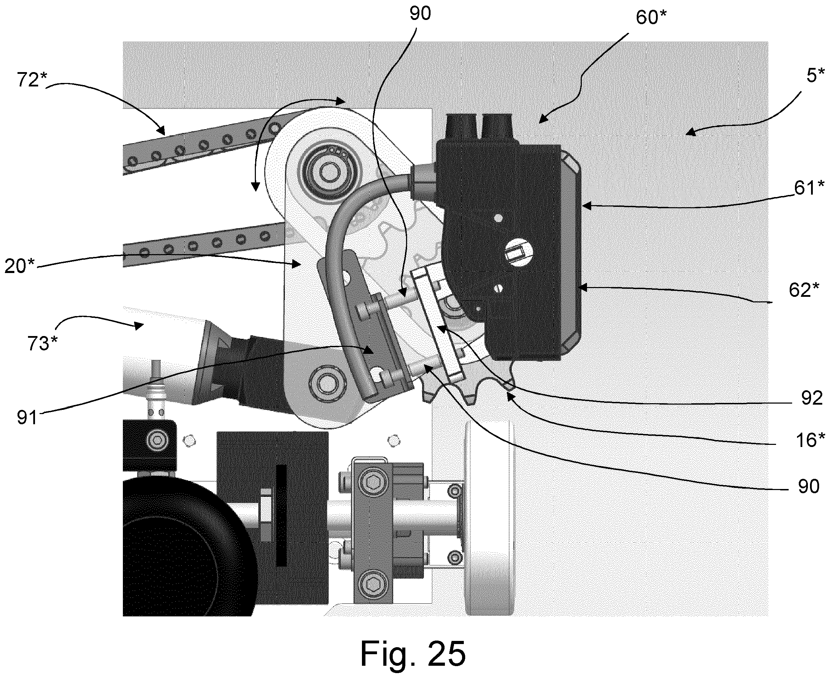

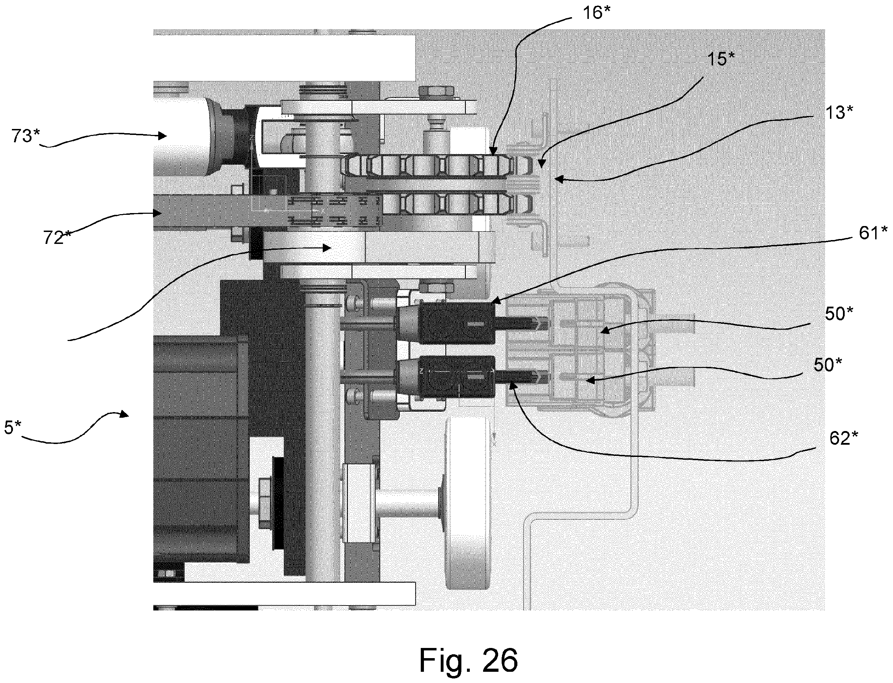

Figure 25 and 26 show an alternative implementation of climbing wheel movement and of a power take-up device 60* with bus bar collector 61* in a corresponding shuttle 5*.

The power take-up device 60* with bus bar collector 61* includes two connection pads 62* as before but these are now arranged in parallel side-by-side so as to coincide with parallel bus bars 50 running side-by-side vertically too. The two connection pads 62* are fixed to a bracket 92 which in turn is connected to a bracket 91 via springs 90 allowing a bias towards the bus bars 50 and compensation of tolerances. The bracket 91 is fixed to the lever arm 20* which is articulated by a linear motor 73* (similar to figure 6C, see below).

On the other side of the lever arm 20* (seen from above) the climbing wheels 16* are arranged as a pair of sprockets to engage corresponding double-chain climbing rails 15*.

The climbing wheels 16* and the bus bar collector 61* are both arranged and connected to the lever arm 20* such that the connection pads 62* engage the bus bars 50 slightly before the climbing wheels 16* engage the climbing rails 15* so that the power connection is provided first and afterwards the climbing can proceed quickly.

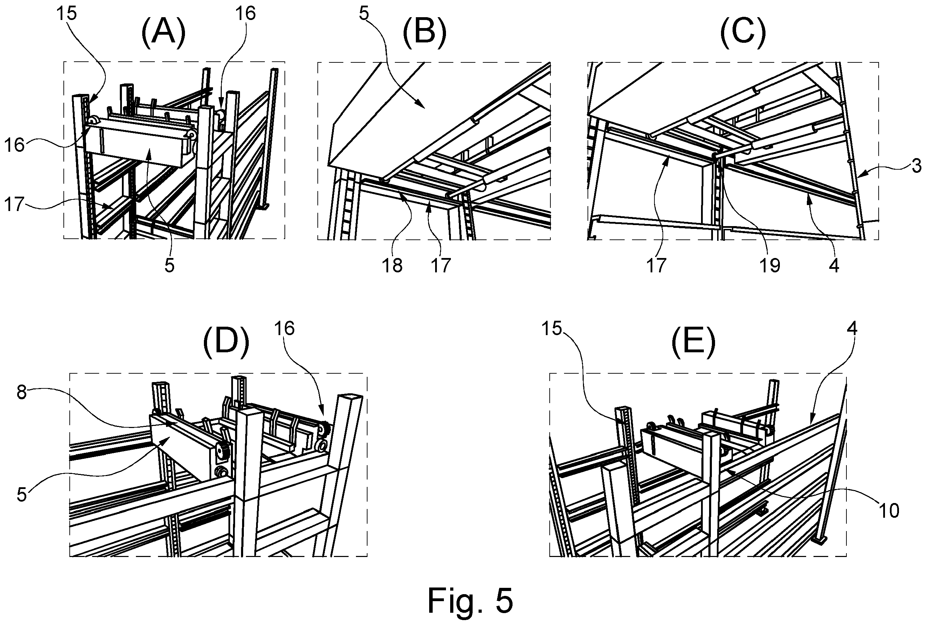

Figures 5A-E indicate how the shuttle 5 climb and take up power. At first the shuttle 5 contacts the vertical climbing rails 15 with its driven climbing wheels 16 positively allowing a climbing travel to a respective level 3 (figure 5A). Then the four traveling wheels 18 are extended from the retracted position to extended position so as to engage with the direction change rails 17 (see figure 5B).

Then the climbing wheels 16 are retracted and the shuttle 5 travels horizontally along the direction change rails 17 using the "second" auxiliary traveling wheels 18 (see figure 5C). These engage an inner flange of the running rails 4 and change rails 17, which both have an identical C-shaped cross section and are aligned. As soon as the gap 19 has been overcome, the travelling wheels 10, being further apart, engage the running rails 4 on the top flange allowing the shuttle 5 to run on the running rails 4 at the same time as using the auxiliary traveling wheels 18. In other words, the shuttle 5 is either supported by the travelling wheels 10 on the top flange forming the running rail 4 and/or by the auxiliary traveling wheels 18 on the lower inner flange forming the direction change rail 17 (see figure 5D). By further travel the shuttle leaves the area of the vertical climbing rails 15 and allows travel using travelling wheels 10 in engagement with the running rails 4 only (see figure 5E). Then the auxiliary traveling wheels 18 may be retracted.

The retraction mechanism could be implemented in various ways. The movement of the auxiliary traveling wheels 18 into position could be implemented by a pneumatic cylinder mechanism, rack and pinion mechanism or a driven lever linkage mechanism. Also, a servo motor drive could be implemented.

Two embodiments are shown in figures 6C and D.

In the figure 6C embodiment the shuttle 5 has a drive means 70a to drive the first and also the second set of wheels for horizontal travel and a separate drive means 70b for driving the climbing wheels 16 for vertical climbing travel.

When using a separate drive means 70b for the climbing wheels 16, such vertical drive means may comprise a motor 71a with a gearbox 71b and a chain or toothed belt 72 driven by the gear box 71b and slung around a drive gear 16b of the respective climbing wheel 16. The chain or toothed belt 72 drives both climbing wheels 16 arranged on opposite sides of the respective vehicle front or back end.

The retraction mechanism for the climbing includes a lever arm 20 that is articulated or hinged on a pivotal point 20a arranged at a position as high as possible in the storage and retrieval apparatus. The lever arm 20 may also be hinged to a linear motor 73 for pivoting about the pivotal point 20a. The axle 20b of climbing wheels 16 are also arranged in lever arm 20.

The driven climbing wheels 16 may be pushed towards the climbing rail 15 by linear motor 73 until the climbing wheel 16 has a certain force/tension against the climbing rail 15.

A self-wedging effect is based on the small angle of the lever arm 20 as the fixed pivoting point 20a is positioned at the highest position facing downwards which supports the climbing wheel 16 and allows it to reach and engage the climbing rail.

The lever arm 20 is a triangular lever arm. The pivotal point 20a is arranged at one corner (highest). An inward facing corner is hinged to the linear motor 73 and an outward facing corner carries the climbing wheel axle 20b.

The angle of the arm in contact with the climbing rail (e. g. chain) and the spring in top of the pushing unit absorbs installation tolerance and deflections between the climbing rails connected/fixed to the uprights 13 of the rack and focuses the weight and forces the climbing wheels into the climbing rail.

The drive means 70a to drive the first and also the second set of wheels for horizontal travel may be a gearbox 71b driving a belt 74 to drive an axle 75 connecting both travelling wheels 10 on opposite sides of the respective vehicle front or back end. The secondary travelling wheels 18 may use a second axle 76 that is driven off the first axle 75 using intermeshing gears 77. A frame 78 may be used to guide the axle 76 (or shaft) and also protect the intermeshing gears 77.

The secondary wheels may be extracted/extended by use of an additional linear drive 79 assembly which moves the secondary wheel axle 76 between the retracted and extended position. The meshing gears 77 may stay in contact throughout the movement.

It is also possible to implement a single drive 80 for both horizontal and vertical travel, which can be switched between the wheels that are driven, e. g. via a gearbox 81 and clutch 82, which is detailed in figure 6D.

When using a single drive for both horizontal and vertical travel, which can be switched between the wheels that are driven, the gearbox and clutch will be implemented to allow switching the single drive 80 between the chain or toothed belt 83 for driving the climbing wheel and the axle 84 or shaft for driving the first set of travelling wheels 10 for horizontal travel using the clutch 82. As such the clutch 82 may also allow electromagnetic switching of the single drive 80 output between one or two drive sprockets 85 for the chain 83 or belt drive of the climbing wheels 16 and the axle 84 for the horizontal travelling wheels 10.

As before, the auxiliary wheels 18 may be driven off the axle 84 by meshing gears 86 driving axle 87. These too may be switchable by the clutch 82.

All the movements are under the control of a control 100 (not further detailed).

Alternatively, the auxiliary traveling wheels 18 could be horizontally moved to be positioned in a vertical line below (or above) the travelling wheels 10, so that they too benefit from the gaps 19, when the shuttle 5 moves vertically. After reaching the destination level the auxiliary traveling wheels 18 could then be moved horizontally into the engaging position.

It is also possible to offset the auxiliary traveling wheels 18 and their surface from that of the traveling wheels 10 so that it is higher and the auxiliary traveling wheels 18 are only have contact to the direction change rails 17 when in the area of direction change. When the gap is overcome the larger "normal" wheels 10 will contact the running rails 4 and the auxiliary traveling wheels 18 are "lifted" off.

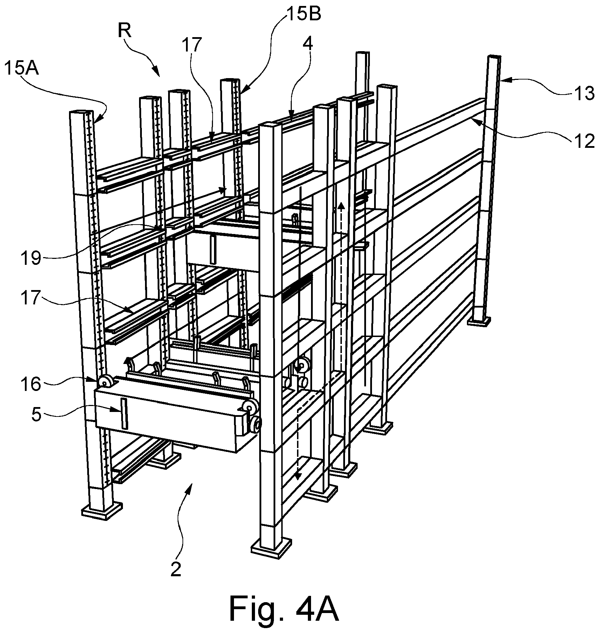

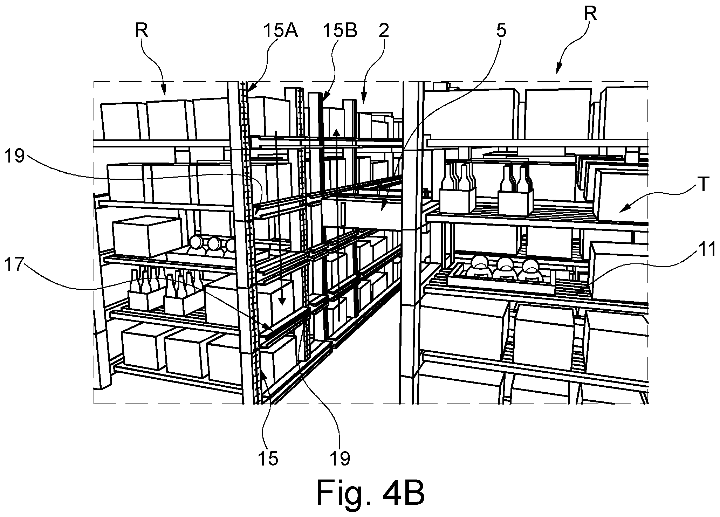

As shown in figure 4A, B it is possible to implement more than one set of climbing rails 15 per aisle 2. In the shown embodiment, two sets of climbing rails 15A, B are present adjacent each other in the aisle.

This allows to use one set for dedicated upward travel and the other set for dedicate downward travel, as indicated by the arrows, increasing throughput. Obviously, a second pair of two sets can be positioned at the other end of the aisle.

This also implements a redundancy, as a shuttle 5 stuck within one set may be circumvented using the other set of climbing rails 15 (as indicated by the hashed lines).

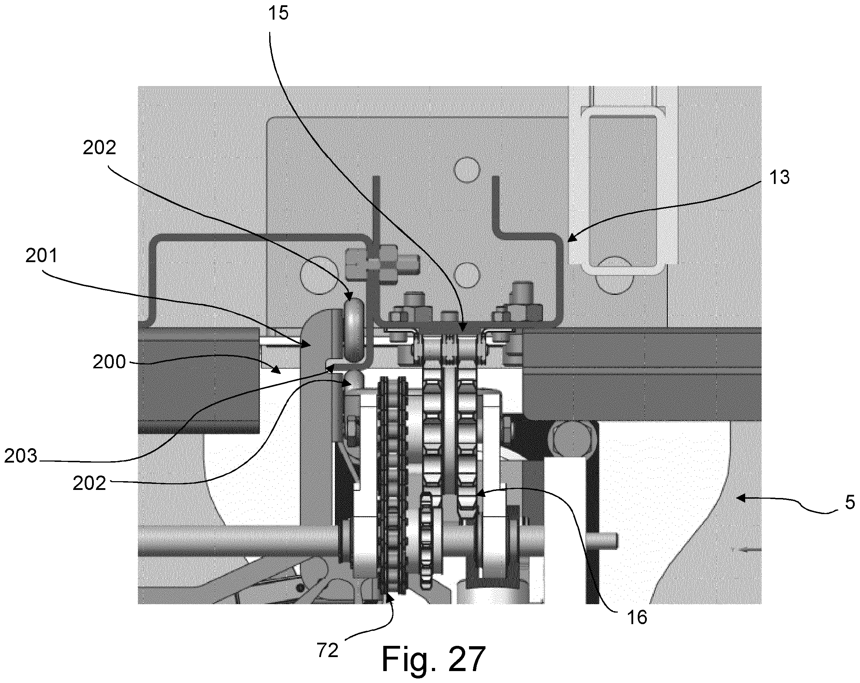

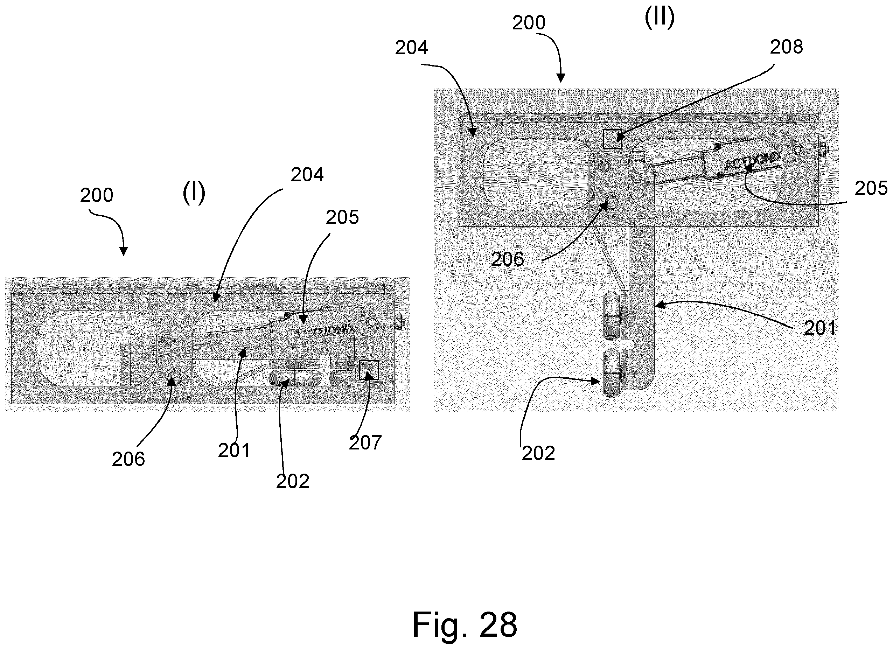

Figures 27 and 28 detail a stabilizing unit 200 that guides the shuttle 5 while climbing. While climbing the shuttle 5 climbs up the uprights 13 by use of its extended climbing wheels 16 engaging the vertical climbing rails 15 implemented as two chains in parallel. During this movement the shuttle 5 is stabilized and guided by a stabilizing unit 200. The stabilizing unit 200 is extendable and retractable so as only to be in use during the vertical climbing movement. The stabilizing unit 200 includes a stabilizing arm 201 that has spaced guiding rollers 202 on the opposite end that accommodate a vertical guide plate or rail 203 that extends vertically along the length of the climbing rail 15 and is connected to the upright 13. The vertical guide plate 203 is positioned adjacent the climbing rails 15.

The guide rollers 202 include not only a first pair of spaced guide rollers 202 but also a second pair of spaced guide rollers 202 aligned with the first pair and also for engaging the vertical guide plate 203.

The stabilizing arm 201 can be moved between an extended position (see figure 28 II) in which it engages the vertical guide plate 203 with the guiding rollers 202 and a retracted position (see figure 28 I) in which it is encompassed in a housing 204. The movement of the stabilizing arm 201 is effected by a linear electric actuator 205, which can swivel the stabilizing arm 201 between the retracted position and the extended position by approx. 90 degrees around a vertical swivel axis 206 situated in the housing 204.

The stabilizing unit may include a first sensor 207 for confirming that the stabilizing arm is in the retracted position and may include a second sensor 208 for confirming that the stabilizing arm 201 is in the extended position.

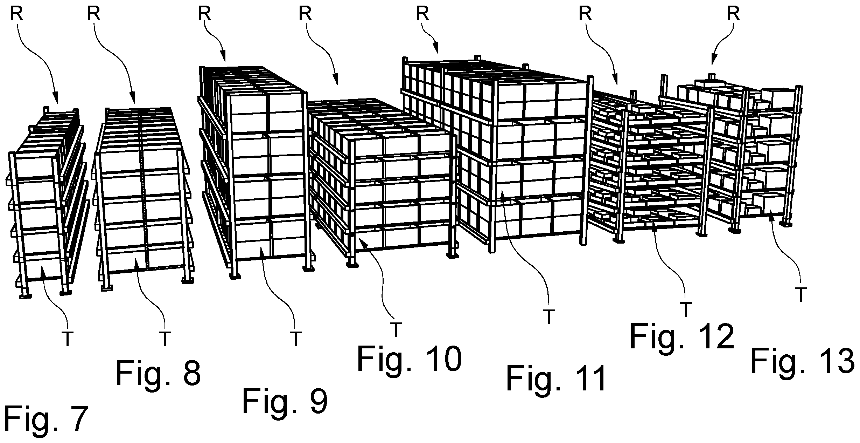

Figures 7-15 indicate various possibilities for implementation of racks and storage. In figure 7 the racks allow single deep storage of load units T being totes or containers, whereas in figure 8 a double deep storage of load units T is implemented. In figure 9 the double deep storage has stacked load units T. Figure 10 in turn shows an implementation of a triple deep storage of load units T, whereas these are stacked in figure 11. As indicated in figure 12, the load units T may be trays, shown in a triple deep storage. It is even possible to not use aids for load units T at all, as seen in figure 13 showing direct placement or storage of boxes without trays or totes etc.

To allow handling of stacked load units T, the corresponding shuttle 5 may be equipped with a mechanism to selectively grip and lift load units to be able to stack and unstack load units inside the rack without necessity for leaving the aisle. Such a mechanism could e. g. grip the side walls with a certain amount of pressure with jaws or apply them laterally and lift off the load unit.

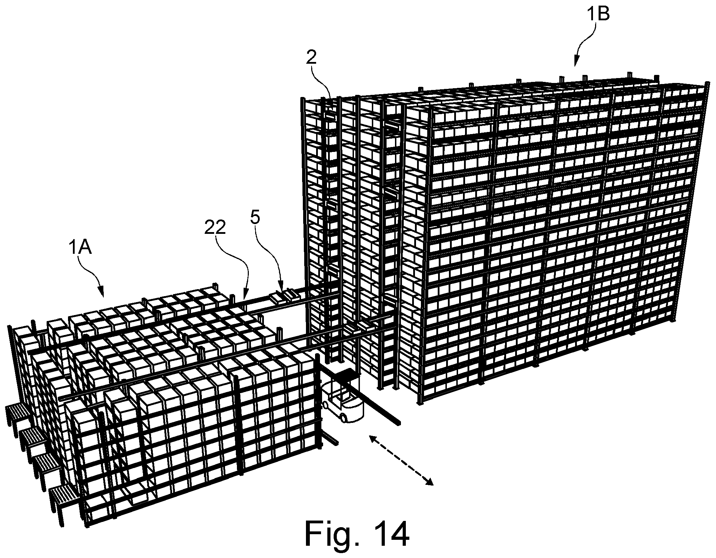

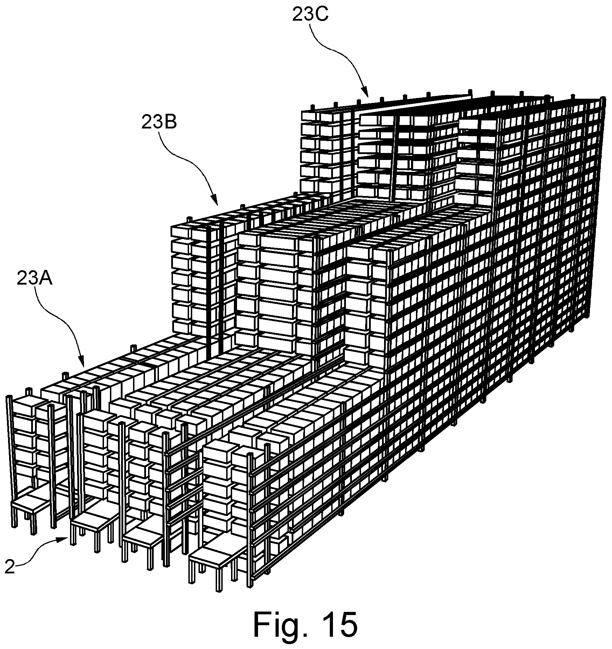

Figures 14 and 15 indicate different implementations of the storage itself.

In figure 14 two storage areas are shown, one smaller one 1A and a larger one 1B being connected by a raised shuttle bridge 22 (by extending the running rails 4), that connects aisles 2 of both areas 1A, B allowing travel of the shuttles 5 between the areas 1A, B. This allows floor-based travel underneath the bridge 22.

In figure 15, the racks R have three different heights 23A, B, C along the extension of the aisle 2, for example allowing placement of the storage 1 on a hill side.

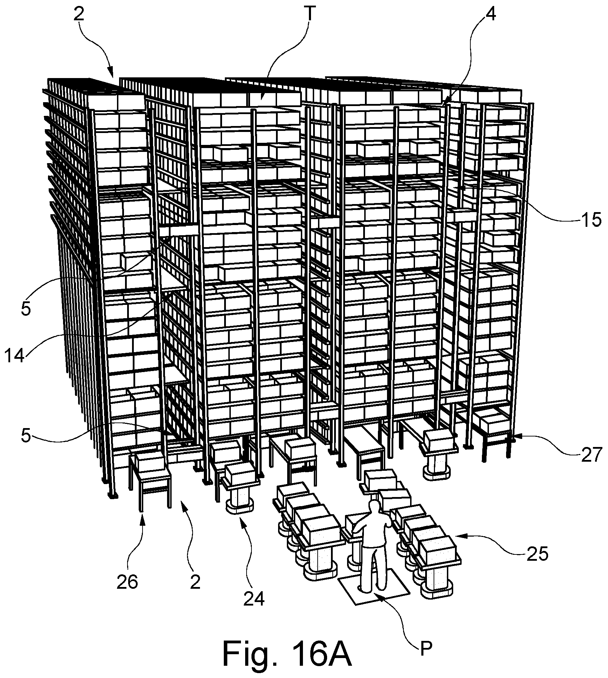

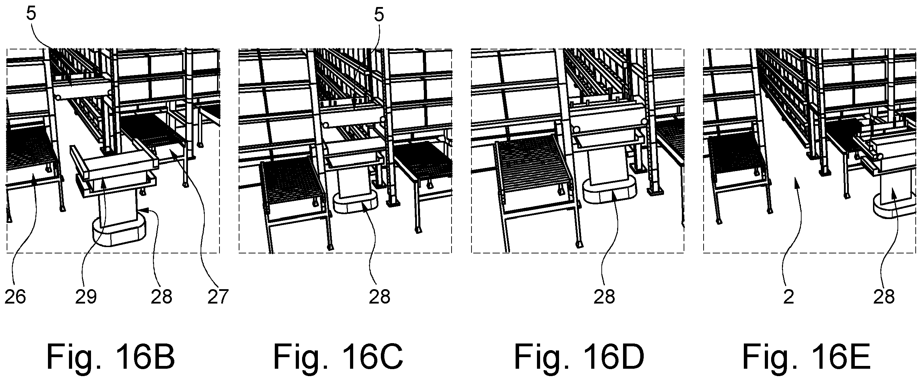

Figures 16 to 17 show different implementations of the storage facility in connection with order fulfilment.

In figures 16A-E an embodiment using AMR 24 for transfer of a shuttle 5 between aisles 2 and/or also for ground-based transportation of load units T between a virtual GTP station 25 and the storage racks R is shown.

In figure 16A, the shuttle 5 drops off a on the lowest level 3 of an aisle 2 onto a discharge conveyor 26, which is placed in extension of one side of the racks R of an aisle. A corresponding storage conveyor 27 is placed on the opposite side.

The shuttle 5 can therefore discharge a load unit T to discharge conveyor 26 or retrieve a load unit T from storage conveyor 27.

The conveyors 26, 27 are supplied or serviced by the ground-based AMR 24 having a carrying platform for a load unit T.

The AMR 24 travel back and forth between the conveyors 26, 27 and a virtual GTP station 25 being formed on-the-fly by the AMR 24 carrying load units T either being order load unit (to be picked into) or being product load units (being picked from) at the area the picker P is positioned. This may be a fixed or variable area.

Additionally, the AMR 24 my exchange load units T between aisles.

In the alternative version of figures 16B-E, the shuttle 5 may also leave an aisle 2 and change aisles 2 by using a second version of AMR 28 that have a carrying platform 29 for a shuttle 5. To change the aisle 2, the AMR 28 may position itself below the climbing rails 15 (see figure 16C) by driving into the respective aisle. The shuttle 5 will then lower itself onto the platform 29 and retract the climbing wheels 16 (figure 5D). Then the AMR 28 will leave the aisle 2 carrying the shuttle 5 and travel to its destination. Such a destination could also be a service and maintenance station.

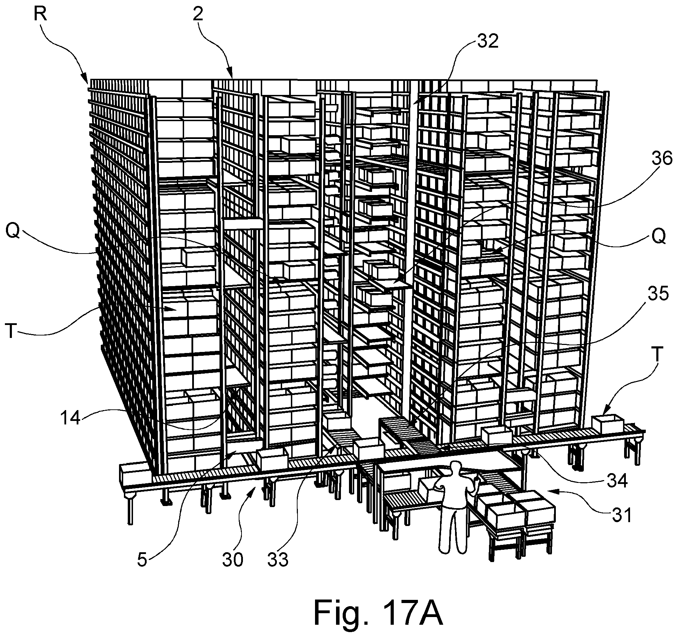

Figure 17A shows an embodiment similar to figure 16a, but using conventional conveyors 30 for load unit T transport in the pre-zone and to a physical GTP station 31.

A direct horizontal exchange of load units T may take place from one aisle 2 to an adjacent aisle 2' via exchange locations Q within the storage racks R, wherein the shuttle 5 itself actively horizontally moves the units T in the exchange locations Q using the telescopic arms.

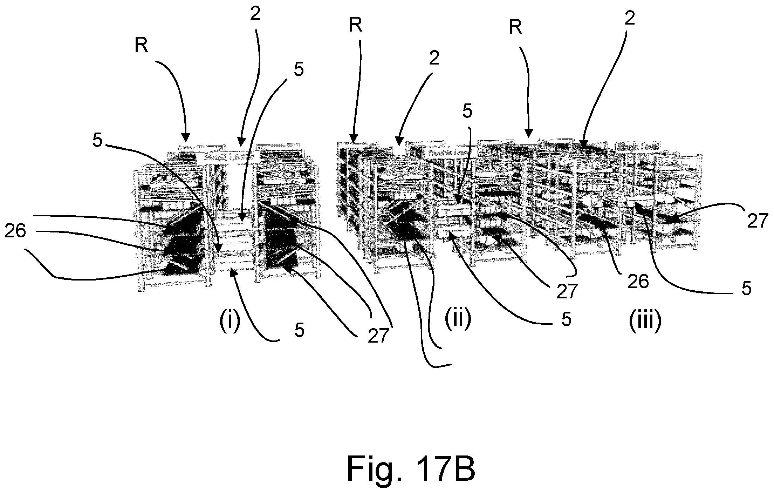

In addition to the climbing shuttles 5 the storage facility 1 according to figure 17 has a lift 32 that is present in at least one storage rack per aisle 2 and can speed up vertical transfer.

The lift 32 interfaces with the conveyor 30 of the pre-zone via discharge and storage conveyors 33, 34. The lift 32 has a conveyor platform 35 that can be raised and lowered and interfaces with buffer conveyors 36 on each level.

As is depicted in figure 17B (i) - (iii) the rack R may be interfaced at more than one level to for example handover conveyors 30 or discharge conveyors 26 and storage conveyors 27 as indicated above. In figure 17B(i) the rack R has three interface or handover levels that each have discharge conveyors 26 and storage conveyors 27 in both racks R of an aisle 2.

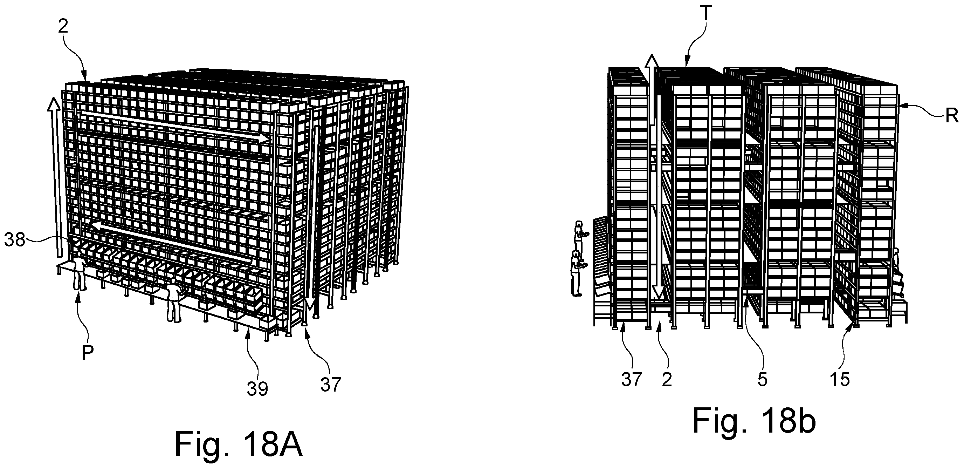

In figure 18A, B an embodiment using a flow rack as a GTP 37 along the length of an outside of a respective storage is shown. The shuttle 5 can supply the flow rack from the aisle 2 behind it by pushing load units through, similar to the operation of the exchange locations Q above. The GTP 37 has two slanted rows 38 of presentation spaces sourced by the flow rack and positioned above each other. Below them is a discharge conveyor 39 to transport picked load units to a packing area.

As indicated by the arrows, the material flow may be "circular", using climbing rails 15 on one side of the storage or aisles 2 for upward travel, the climbing rails 15 on the other side of the storage or aisles 2 for downward travel and the upper levels 3 for travel from the upward to the downward climbing rails and the lower levels for the opposite direction.

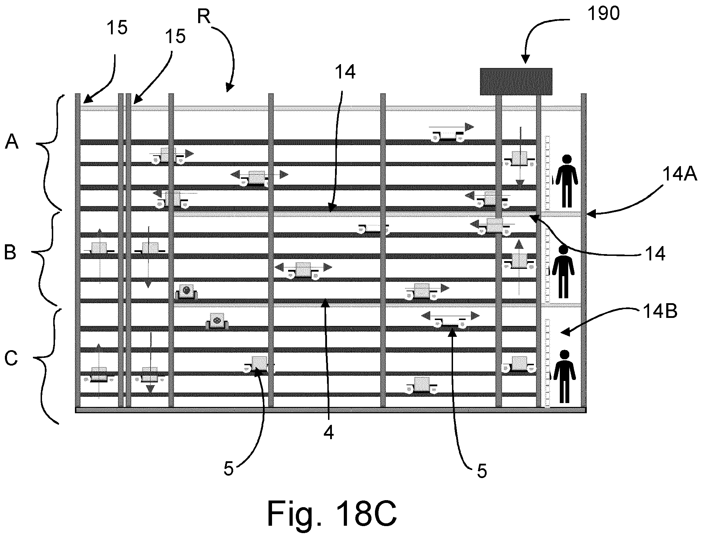

As indicated in figure 18C such a circular movement may be different when using a climbing section adjacent a maintenance area 14A for downward movement.

In such a storage facility, maintenance platforms 14 are arranged at the other side of the storage rack R or side opposite to that where the climbing rails 15 are positioned. These create maintenance levels. This allows for maintenance without having to place a movable platform. Such (fixed) platforms 14 will usually be arranged every 3 - 8 travelling levels of the storage and retrieval apparatus, e. g. every 4 or 5 levels.

Such a maintenance area created thereby will include maintenance access bays 14B for safe access by the personnel and possibly include stairs, ladders etc. Between the maintenance access bays 14B and the storage rack R itself a climbing rail 15 section will be located that allows shuttle 5 needing maintenance to climb up or down without interfering with normal operation. Additionally, a crane 190 is installed above that climbing section to allow immovable shuttle 5 to be handled.

Further such an additional climbing rail 15 section on the side of the rack opposite the normal climbing sections or chimneys allows a special operation, of circular travel of the shuttle 5, especially within segments A, B, C created by the maintenance platforms 14 and maintenance access bays 14B which interrupt the vertical climbing rails 15. Such a circular travel can increase performance. For example, when several loads from the same level need to be extracted, several shuttle 5 enter into that same level but return by changing the level at the end of the aisle using the additional climbing rail 15 section and returning to the "normal" climbing chimneys at the beginning (or other side) of the aisle 2. In this way the more than one shuttle 5 per level do not interfere with each other.

The additional climbing sections or chimneys (not limited) to the end of the aisle 2 must be only over a maintenance level or access bay 14B, therefore the circular travel is limited to that segment and ensures safe entrance for personnel. In other words, the maintenance platforms 14 and bays 14B interrupt the climbing rails 15 creating the segments A, B, C.

It is possible to have a clockwise circular travel (seen in the side view as depicted) within a maintenance segment, and this would have the advantage of not needing any bus bar etc. when the shuttles change the level climbing downwards.

It is possible to have a counter-clockwise circularity within the maintenance segment but if the battery capacity is not sufficient for the shuttle to climb, this climbing section or chimney over the maintenance level at the aisle end will need bus bars 50.

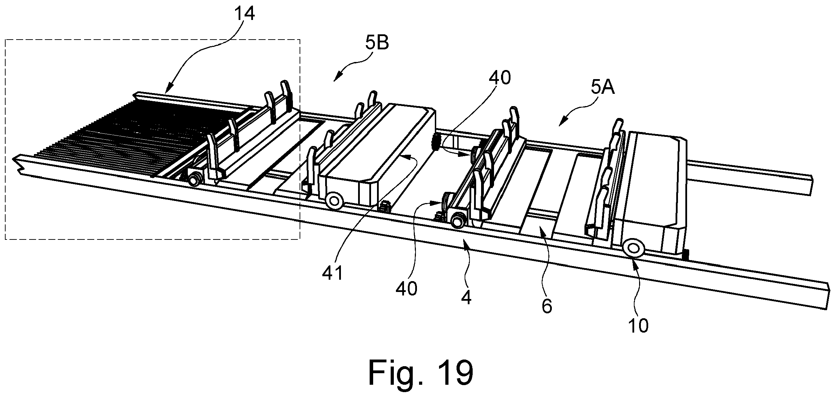

Figure 19 shows a rescue operation of a shuttle 5B that has broken down in the aisle 2, somewhere on the running rails 4. It can be rescued by a second shuttle 5A that can be controlled to push the shuttle 5B to the end of the aisle 2 where it can be more easily accessed.

To do so the shuttles 5A include a set of bumpers 40 facing the direction of movement along the aisle 2 for contacting the surface 41 of the front respective back housing of the shuttle 5B, or alternatively a respective pair of bumpers 40 of the second shuttle 5B, allowing a pushing operation.

The bumpers 40 may be positioned on the surface 41 of the front respective back housing of the shuttle 5A, B or alternatively on the climbing wheels 16' depending on their placement.

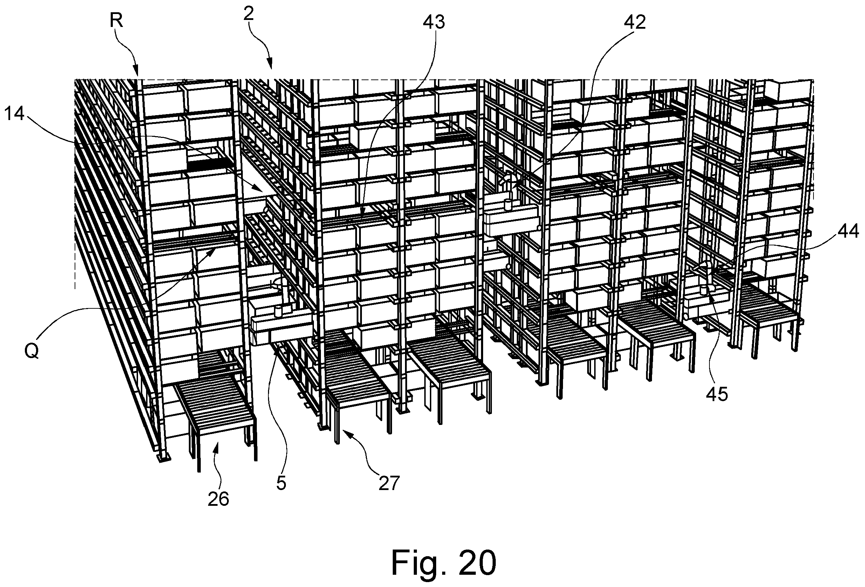

Figure 20 shows an embodiment having shuttles 5 (as above) and robotic picking shuttles 42 as well as having cross aisle running rails 43 forming a bridge perpendicular to aisle 2 direction for movement of shuttles 5 between aisles 2 propelled by the set of the climbing wheels 16.

The robotic picking shuttles 42 will have all the features of a climbing shuttle 5 and additionally have a robotic picking device 44 and a vision system 45 for identifying the respective item to be picked. The robotic picking shuttles 42 will carry an order load unit that they pick into using the robotic picking device 44 and the vision system 45, without leaving the rack R. The product load unit will be presented in the aisle by a climbing shuttle 5.

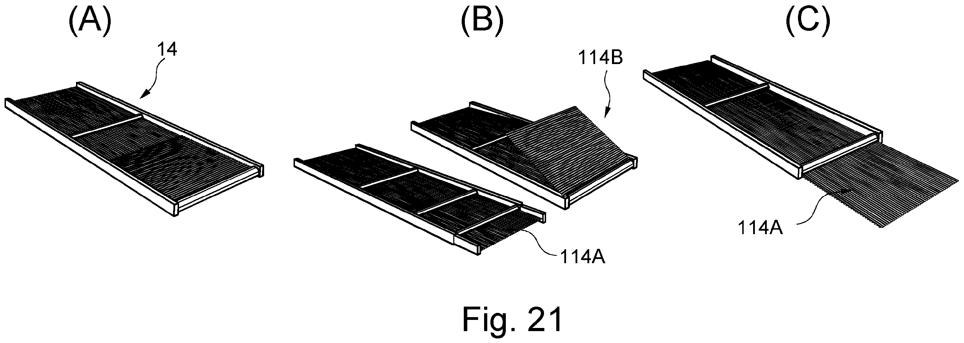

Figure 21 shows an implementation of a removable maintenance platform 14 (figure 21A) that is adapted to be brought into place for accessing the area between the vertical climbing rails 15. Obviously, this area cannot be constantly accessible by a fixed maintenance platform.

The maintenance platform 14 is shown in two alternatives. Both have an extendable grating-based platform 114A that is extendable by an extension platform 114B that is either slidable or swivable for the extension (see figure 21B), to achieve the extended access to the area between the vertical climbing rails 15.

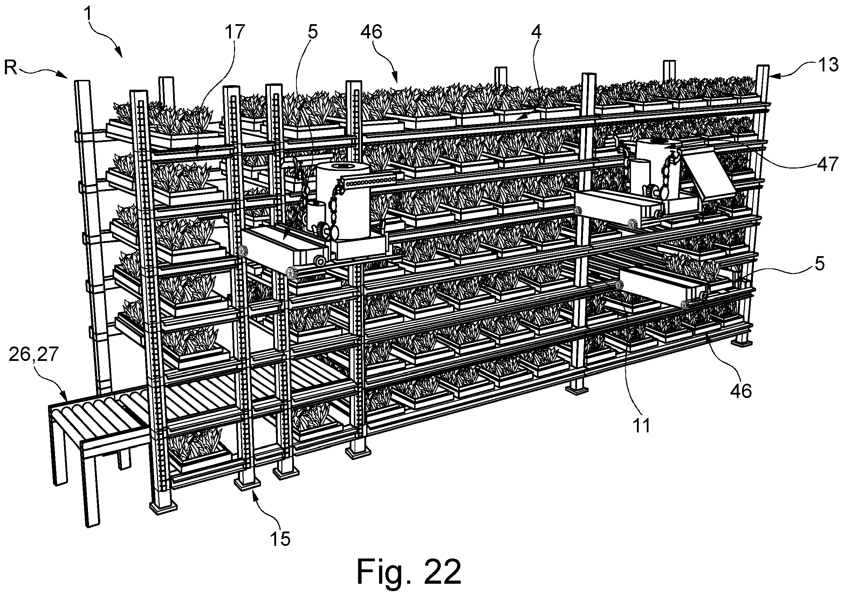

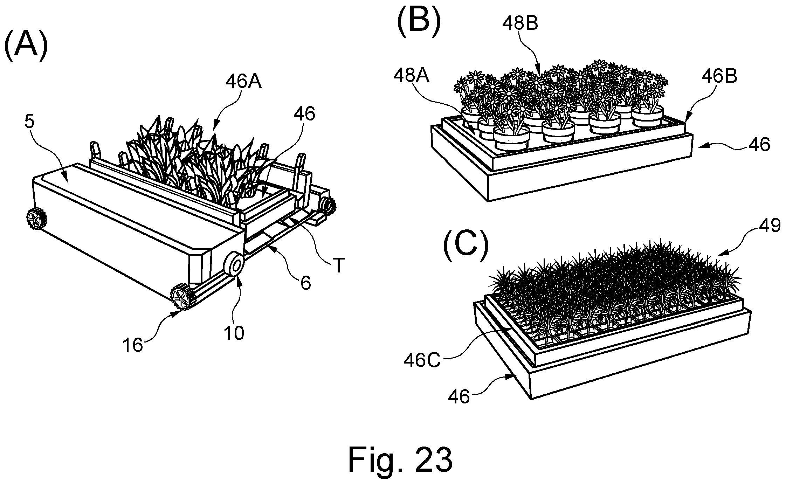

Figures 22 - 24 show an embodiment using the invention in the context of vertical farming. In this context, the storage is similar to that of figure 16A, with the difference that the load units are special trays 46 (see figure 23A, B, C) that carry plants, and that the shuttle 5 carry special plant maintenance load units 47.

The racks R support the trays 46, similar to normal load units T, and will feature a light source etc. for the plants to grow. The trays 46 can either hold a boxlike open insert 46A for directly holding soil or growth medium, an insert 46B having openings 48A arranged in a grid for holding planting pots 48B, or a compartmented insert 46C providing multiple compartments for directly holding a plant each.

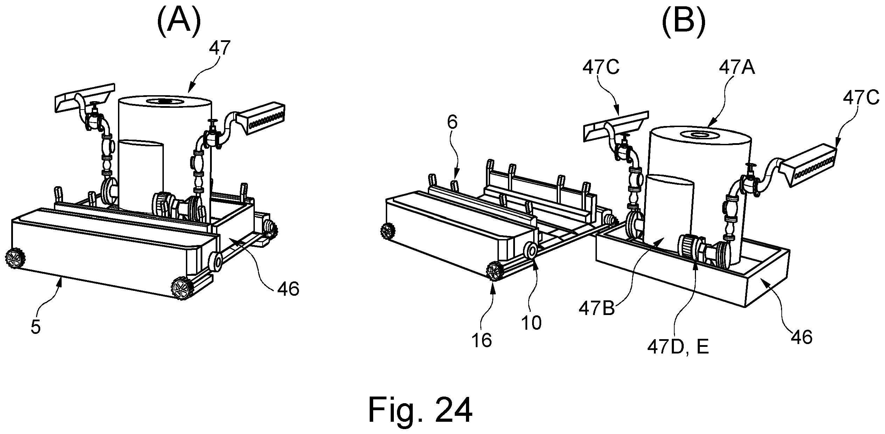

As detailed in figure 24, the special plant maintenance load units 47 may also be transported in trays 46. The plant maintenance load units 47 will contain a water tank 47A, a pump 47B, two water dispensers 47C (one on each side to water plants on either side of the aisle), an electrical energy source 47D (battery, capacitors etc.) and a controller 47E etc. The water dispensers 47C may be implemented to be adjustable, like a robotic arm.

In this way, shuttles 5 may transport the plant maintenance load units 47 through the rack R and water irrigate the plants. The water may contain fertilizer, insecticide etc. Shuttle 5 may also relocate, discharge or store trays 46 with plants as necessary.

In all embodiments, at least one of the vertical rails 15 may include a power charging line (bus bar) adapted to connect to a power take-up device on the shuttle 5 to allow charging of an onboard battery or capacitor. Additionally, shuttle 5 may contain a recuperation device connected to the climbing wheels to recover energy while moving downwards.

## Claims

1. A storage facility (1) having a plurality of storage racks (R) and storage rack levels (3) for storage of load units (T), wherein two storage racks (R) have an aisle (2) between them;
each storage rack level having running rails on the opposing faces of the storage racks (R), on which at least one storage and retrieval apparatus (5) may travel the length of the aisle (2),
for each aisle (2) at least two pairs of vertical climbing rails (15) on the opposing faces of the storage racks (R) adjacent the respective aisle (2);
the storage and retrieval apparatus (5) having a carrying area, for at least one load unit (T), located between load handling means that may extend into the storage racks (R) in a direction perpendicular to the length of the aisle (2), for placing or retrieval of load units (T) into or from the storage racks (R),
each storage and retrieval apparatus (5) having a first set of four traveling wheels (10) for traveling along the running rails (4) horizontally along the respective storage rack level (3) of an aisle (2); two wheels per set on each side of the storage and retrieval apparatus (5), one or both of each side being driven on a joint driven axis,
each storage and retrieval apparatus (5) has climbing means for vertical movement, along vertical climbing chimneys, that include vertical climbing rails (15), **characterized in that** the climbing means of each storage and retrieval apparatus (5) include a set of four climbing wheels (16) for interaction with the vertical climbing rails (15), the four climbing wheels (16) having a perpendicular axis of movement in comparison to the four travelling wheels and the four climbing wheels (16) being retractable between an extended engaging position for interaction with the vertical climbing rails and a retracted non-engaging position while travelling horizontally along the running rails along the respective storage rack level (3), and **in that** the storage and retrieval apparatus (5) has a drive means (70a) to drive the first set of traveling wheels (10) for horizontal travel and a separate drive means (70b) for driving the climbing wheels (16) for vertical climbing travel or a single drive (80) for both horizontal and vertical travel, which can be switched between the wheels that are driven.

2. Storage facility (1) according to claim 1, **characterized in that** each storage and retrieval apparatus (5) has a second set of, preferably retractable, four traveling wheels (10) for traveling along direction change rails horizontally along the respective storage rack level (3) of an aisle (2) in the area of the vertical rails, two wheels per set on each side of the storage and retrieval apparatus (5), one or both of each side being driven on a joint driven axis, for use while changing the direction of movement of the storage and retrieval apparatus (5) from a vertical movement along the vertical climbing rails to a horizontal movement along the running rails of a respective storage rack level (3) of an aisle (2).

3. Storage facility (1) according to claim 2, **characterized in that** the four traveling wheels (10) for traveling along direction change rails horizontally along the respective storage rack level (3) of an aisle (2) in the area of the vertical rails are retractable wheels and are controlled to be extracted whilst the storage and retrieval apparatus (5) is traveling along direction change rails.

4. Storage facility (1) according to a preceding claim, **characterized in that** the direction change rails are arranged between the vertical climbing rails on each level (3) having running rails and **in that** the running rails of a respective storage rack level (3) of an aisle (2) have a gap to the direction change rails horizontally along the respective storage rack level (3) of an aisle (2) in the area of the respective vertical rail.

5. Storage facility (1) according to a preceding claim, **characterized in that** the separate drive means (70b) for the climbing wheels (16) comprise a motor (71a) with a gearbox (71b) and a chain or toothed belt (72) driven by the gear box (71a) and slung around a drive gear (16b) of the respective climbing wheel (16).

6. Storage facility (1) according a preceding claim, **characterized in that** the single drive (80) for both horizontal and vertical travel includes a gearbox (81) and clutch (82) implemented to allow switching the single drive (80) between a chain or toothed belt (83) for driving the climbing wheel (16) and the axle (84) or shaft for driving the first set of traveling wheels (10) for horizontal travel using the clutch (82).

7. Storage facility (1) according to a preceding claim, **characterized in that** the extension/retraction mechanism for the climbing wheels (16) includes a lever arm (20) that is articulated or hinged on a pivotal point (20a) arranged at a position as high as possible in the storage and retrieval apparatus (5).

8. Storage facility (1) according to a preceding claim, **characterized in that** the lever arm (20) is hinged to a motor assembly (73) for pushing the climbing wheels (16) towards the vertical climbing rail (15).

9. Storage facility (1) according to a preceding claim, **characterized in that** the drive means (70a) to drive the first and optionally also the second set of wheels for horizontal travel includes a motor (71a) driving a belt (74) to drive an axle (75) connecting both traveling wheels (10) on opposite sides of the respective front or back end of the storage and retrieval apparatus (5).

10. Storage facility (1) according to claim 9, **characterized in that** the secondary traveling wheels (18) use a second axle (76) that is driven off the first axle (75) using intermeshing gears (77).

11. Storage facility (1) according to claim 10, **characterized in that** a frame (78) is used to guide the second axle (76) and also protect the intermeshing gears (77).

12. Storage facility (1) according to a preceding claim 9 - 11, **characterized in that** the secondary traveling wheels (18) may be extracted/extended by use of an additional linear drive assembly (79) which moves the secondary wheel axle (76) between the retracted and extended position.
